(19) Europäisches Patentamt
European Patent Office
Office européen des brevets

(11) **EP 3 490 032 B1**

(12) **EUROPEAN PATENT SPECIFICATION**

(45) Date of publication and mention
of the grant of the patent:
**09.06.2021 Bulletin 2021/23**

(21) Application number: **17845213.2**

(22) Date of filing: **15.08.2017**

(51) Int Cl.:
*H01M 50/40* (2021.01)          *H01M 50/403* (2021.01)
*H01M 50/411* (2021.01)          *H01M 50/449* (2021.01)
*H01M 10/0525* (2010.01)

(86) International application number:
**PCT/CN2017/097563**

(87) International publication number:
**WO 2018/040911 (08.03.2018 Gazette 2018/10)**

(54) **BATTERY SEPARATOR AND LITHIUM ION BATTERY AND PREPARATION METHOD OF SAME**

BATTERIESEPARATOR UND LITHIUM-IONEN-BATTERIE UND HERSTELLUNGSVERFAHREN DAFÜR

SÉPARATEUR DE BATTERIE, BATTERIE AU LITHIUM-ION ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2016 CN 201610753606**

(43) Date of publication of application:
**29.05.2019 Bulletin 2019/22**

(73) Proprietor: **BYD Company Limited**
**Shenzhen, Guangdong 518118 (CN)**

(72) Inventors:
• **JIN, Lina**
**Shenzhen**
**Guangdong 518118 (CN)**
• **SHAN, Jun**
**Shenzhen**
**Guangdong 518118 (CN)**
• **HU, Gang**
**Shenzhen**
**Guangdong 518118 (CN)**
• **HE, Long**
**Shenzhen**
**Guangdong 518118 (CN)**

(74) Representative: **Hoffmann Eitle**
**Patent- und Rechtsanwälte PartmbB**
**Arabellastraße 30**
**81925 München (DE)**

(56) References cited:
CN-A- 102 263 290          CN-A- 102 522 513
KR-A- 20150 069 515          US-A1- 2014 248 525
US-A1- 2015 303 003

**EP 3 490 032 B1**

**Description**

<u>FIELD</u>

The present disclosure relates to the field of lithium-ion batteries, and in particular to a battery separator, a preparation method of the battery separator, a battery separator prepared by the method, a lithium-ion battery including the battery separator and a preparation method of the lithium-ion battery.

<u>BACKGROUND</u>

The polymer matrix which can swell the liquid electrolyte and has lithium-ion-conducting properties mainly includes polyethers (e.g., polyethylene oxide (PEO)), polyacrylonitriles (PAN), polyacrylates (e.g., polymethyl methacrylate (PMMA) and copolymers thereof), polyvinylidene fluoride (including polyvinylidene difluoride (PVDF) and a vinylidene fluoride-hexafluoropropylene copolymer (P(VDF-HFP)) and the like. Among them, the polyacrylates are a kind of more studied polymer matrix. These polymers structurally have a similar functional group to the carbonate solvent in the electrolyte, and therefore have good compatibility with the electrolyte, low interface impedance with the metal lithium electrode, and good interface stability, thus being an ideal polymer matrix.

The application of acrylate polymers as a gel polymer electrolyte (GPE) matrix to lithium-ion batteries has been reported in many patent documents. CN103633367A discloses that a self-crosslinked pure acrylic emulsion (the main component is an acrylate polymer), which is widely used in the fields of leather finishing, fiber treatment, plastics, metal anticorrosion, rust prevention, woodware, exterior wall decoration, etc. is used for reference in the field of polymer lithium-ion batteries, the use of a large number of organic solvents is abandoned, and the green production of polymer lithium-ion batteries is realized. When applied to polymer lithium-ion batteries, the matrix has the advantages of high lyophilicity, high liquid retention rate, good thermal stability and the like. However, the GPE has high bulk impedance and low ionic conductivity, so that the obtained lithium-ion battery has poor rate performance and large polarization when charging and discharging at a high rate, thereby affecting the performance of the lithium-ion battery.

In order to reduce the bulk impedance of the self-crosslinked GPE and increase the ionic conductivity, it can be subjected to pore-forming. The phase inversion method is one of the main methods for preparing a porous membrane, and mainly includes two forms: (1) solvent evaporation-precipitation phase separation; and (2) immersion-precipitation phase separation. For example, CN101062987A discloses a porous gel polymer electrolyte membrane and a preparation method thereof. The porous gel polymer electrolyte membrane contains 33-54 wt% of polyvinylidene fluoride, 3-15 wt% of acrylonitrile-polyethylene glycol monomethyl ether methacrylate copolymer and 43-52 wt% of 1M lithium hexafluorophosphate carbonate electrolyte. The preparation method of the porous gel polymer electrolyte membrane includes: firstly synthesizing a polyethylene glycol monomethyl ether methacrylate-acrylonitrile copolymer, then blending the polyethylene glycol monomethyl ether methacrylate-acrylonitrile copolymer with polyvinylidene fluoride, dissolving the mixture in an N,N-dimethylacetamide solvent to prepare a polymer solution, coating the polymer solution on a glass plate, immersing the glass plate in deionized water to obtain a porous membrane, and adsorbing a lithium hexafluorophosphate carbonate electrolyte to obtain the porous gel polymer electrolyte membrane. In addition, the pore-forming method employed in this patent application is immersion-precipitation phase separation.

US 2015/0303003 describes a separator comprising a porous substrate, a porous coating layer and a binder layer which contains at least homopolymer of PVDF and at least one copolymer of P (VDF-HFP), so that a content difference of HFP present in the two compounds is about 3 weight % or higher. As a dispersant which represents an optional ingredient, for example acrylic copolymers may be used.

US 2014/0248525 describes a separator which includes a porous substrate and an adhesive porous layer which includes a PVDF resin and a filler. The filler may for example be a crosslinked polyacrylic acid.

<u>SUMMARY</u>

The objective of the present disclosure is to overcome the defect of poor rate of the lithium-ion battery due to high bulk impedance, low ionic conductivity and large polarization when charging and discharging at a high rate in the self-crosslinked GPE in the existing technology, and provide a novel battery separator, a preparation method of the battery separator, a battery separator prepared by the method, a lithium-ion battery including the battery separator and a preparation method of the lithium-ion battery.

Specifically, the present disclosure provides a battery separator, wherein the battery separator includes a porous base membrane and a bonding layer attached to at least one side surface of the porous base membrane, wherein the bonding layer contains an acrylate crosslinked polymer and a styrene-acrylate crosslinked copolymer and/or a vinylidene fluoride-hexafluoropropylene copolymer, and the porosity of the bonding layer is 40-65% which separator is as defined in the claims.

The present disclosure further provides a preparation method of the battery separator, including: attaching a slurry containing a self-crosslinked pure acrylic emulsion and a self-crosslinked styrene-acrylic emulsion and/or a vinylidene fluoride-hexafluoropropylene copolymer emulsion to at least one side surface of a porous base membrane, and then drying to form a bonding layer having a porosity of 40-65% on at least one side surface of the porous base membrane.

The present disclosure further provides a battery separator prepared by the above method.

The present disclosure further provides a lithium-ion battery, including a positive electrode, a negative electrode, an electrolyte and a battery separator, wherein the battery separator is the above battery separator.

In addition, the present disclosure further provides a preparation method of the lithium-ion battery, including: sequentially laminating or winding a positive electrode plate, a battery separator and a negative electrode plate into a pole core, then injecting an electrolyte into the pole core and sealing, wherein the battery separator is the above battery separator.

The battery separator provided by the present disclosure adopts a slurry containing a self-crosslinked pure acrylic emulsion and a self-crosslinked styrene-acrylic emulsion and/or a vinylidene fluoride-hexafluoropropylene copolymer emulsion to form a bonding layer having a specific porosity on the porous base membrane, and the bonding layer contains an acrylate crosslinked polymer and a styrene-acrylate crosslinked copolymer and/or a vinylidene fluoride-hexafluoropropylene copolymer. After absorbing the electrolyte, the bonding layer has excellent lithium-ion-conducting properties (GPE properties), significantly lowered bulk impedance and significantly increased ionic conductivity, and when the battery separator containing the bonding layer is used for a lithium-ion battery, the rate charging-discharging performance is significantly increased, and the bonding layer can inhibit the decomposition of the electrolyte in the battery at high temperature, thereby improving the high-temperature cycle performance and high-temperature storage performance. In addition, the bonding layer can be used as a transition layer to tightly bond the positive electrode plate and the negative electrode plate together, so as not only to form an integrated battery pole core to increase the hardness of a pouch cell, but also to enable the electrode plates not to wrinkle in the cycle process of the battery, thereby ensuring the positive electrode plate, the negative electrode plate and the battery separator to be always in close contact, reducing the capacity loss, improving the cycle performance of the battery and prolonging the service life of the battery.

Other features and advantages of the present disclosure will be described in detail in the following detailed description.

## BRIEF DESCRIPTION OF THE DRAWINGS

The drawings are included to provide a further understanding of the present disclosure and constitute a part of the specification. They are used to explain the present disclosure together with the specific implementations below, but are not intended to limit the present disclosure. In the drawings:

FIG. 1 is an SEM image of a porous self-crosslinked polymer membrane Sa1 obtained in Embodiment 1, with a magnification of 5000 times;

FIG. 2 is an SEM image of a porous self-crosslinked polymer membrane Sa4 on a CCL surface obtained in Embodiment 4, with a magnification of 20000 times;

FIG. 3 is an SEM image of a porous self-crosslinked polymer membrane Sa4 on a PE surface obtained in Embodiment 4, with a magnification of 20000 times;

FIG. 4 is an anatomical photograph (positive electrode and separator) of an SL435573 $LiCoO_2$/graphite pouch polymer lithium-ion battery obtained in Embodiment 1;

FIG. 5 is an anatomical photograph (negative electrode and separator) of an SL435573 $LiCoO_2$/graphite pouch polymer lithium-ion battery obtained in Embodiment 1;

FIG. 6 is a graph showing the relationship between the discharge capacity and the number of cycles of an SL435573 $LiCoO_2$/graphite pouch polymer lithium-ion battery obtained in Embodiment 1 and Comparative Embodiment 2 during a 1C cycle at 25°C; and

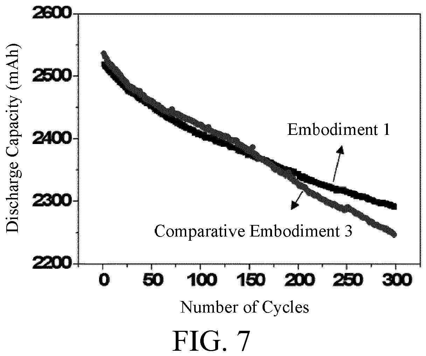

FIG. 7 is a graph showing the relationship between the discharge capacity and the number of cycles of an SL435573 $LiCoO_2$/graphite pouch polymer lithium-ion battery obtained in Embodiment 1 and Comparative Embodiment 3 during a 1C cycle at 45°C.

## DETAILED DESCRIPTION

Specific implementations of the present disclosure are described in detail below.

The endpoints and any values of the ranges disclosed herein are not limited to the precise range or value, and such ranges or values should be understood to include values that are close to the ranges or values. For numerical ranges, values between the endpoint values of the various ranges, the endpoint values of the various ranges and the individual point values, and values between the individual point values can be combined with one another to yield one or more new numerical ranges, and these numerical ranges should be considered as specifically disclosed herein.

A battery separator provided by the present disclosure includes a porous base membrane and a bonding layer attached to at least one side surface of the porous base membrane, wherein the bonding layer contains an acrylate crosslinked polymer and a styrene-acrylate crosslinked copolymer and/or a vinylidene fluoride-hexafluoropropylene copolymer, and the porosity of the bonding layer is 40-65%.

"The bonding layer contains an acrylate crosslinked polymer and a styrene-acrylate crosslinked copolymer and/or a vinylidene fluoride-hexafluoropropylene copolymer" means that the bonding layer contains the acrylate crosslinked polymer and the styrene-acrylate crosslinked copolymer but does not contain the vinylidene fluoride-hexafluoropropylene copolymer, or contains the acrylate crosslinked polymer and the vinylidene fluoride-hexafluoropropylene copolymer but does not contain the styrene-acrylate crosslinked copolymer, or simultaneously contains the acrylate crosslinked polymer, the styrene-acrylate crosslinked copolymer and the vinylidene fluoride-hexafluoropropylene copolymer. Further, "contains a self-crosslinked pure acrylic emulsion and a self-crosslinked styrene-acrylic emulsion and/or a vinylidene fluoride-hexafluoropropylene copolymer emulsion" may also be similarly explained.

The acrylate crosslinked polymer refers to a polymer obtained by crosslinking polymerization of a reactive acrylate monomer. The degree of crosslinking of the acrylate crosslinked polymer may be 2-30%, optionally 5-20%. In the present disclosure, the degree of crosslinking refers to the percentage of the weight of the crosslinked polymer to the total weight of the polymer. Further, the glass transition temperature of the acrylate crosslinked polymer is optionally -20°C to 60°C, for example, -12°C to 54°C. According to the present disclosure, the acrylate crosslinked polymer is a mixture of a first acrylate crosslinked polymer and a second acrylate crosslinked polymer and/or a third acrylate crosslinked polymer, or the second acrylate crosslinked polymer, or the third acrylate crosslinked polymer; wherein the first acrylate crosslinked polymer contains 70-80 wt% of polymethyl methacrylate segment, 2-10 wt% of polyethyl acrylate segment, 10-20 wt% of polybutyl acrylate segment and 2-10 wt% of polyacrylic acid segment, the second acrylate crosslinked polymer contains 30-40 wt% of polymethyl methacrylate segment, 2-10 wt% of polyethyl acrylate segment, 50-60 wt% of polybutyl acrylate segment and 2-10 wt% of polyacrylic acid segment, and the third acrylate crosslinked polymer contains 50-80 wt% of polymethyl methacrylate segment, 2-10 wt% of polyethyl acrylate segment, 15-40 wt% of polybutyl acrylate segment and 2-10 wt% of polyacrylic acid segment; and the glass transition temperature of the first acrylate crosslinked polymer is 50°C to 60°C, the glass transition temperature of the second acrylate crosslinked polymer is -20°C to -5°C, and the glass transition temperature of the third acrylate crosslinked polymer is 30°C to 50°C.

The styrene-acrylate crosslinked copolymer refers to a copolymer obtained by copolymerization of a styrene monomer and a reactive acrylate monomer. The weight ratio of a styrene structural unit to an acrylate structural unit in the styrene-acrylate crosslinked copolymer may be (0.5 to 2):1, optionally (0.67 to 1.5):1. The degree of crosslinking of the styrene-acrylate crosslinked copolymer may be 2-30%, optionally 5-20%. Further, the glass transition temperature of the styrene-acrylate crosslinked copolymer is optionally -30°C to 50°C, for example, -20°C to 50°C. According to an implementation of the present disclosure, the styrene-acrylate crosslinked copolymer contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment; and the glass transition temperature of the styrene-acrylate crosslinked copolymer is 15°C to 30°C.

The glass transition temperature of the vinylidene fluoride-hexafluoropropylene copolymer is optionally -65°C to - 40°C, for example, -60°C to -40°C. According to an implementation of the present disclosure, the vinylidene fluoride-hexafluoropropylene copolymer contains 80-98 wt% of polyvinylidene fluoride segment and 2-20 wt% of polyhexafluoropropylene segment, optionally contains 90-96 wt% of polyvinylidene fluoride segment and 4-10 wt% of polyhexafluoropropylene segment; and the glass transition temperature of the vinylidene fluoride-hexafluoropropylene copolymer is -60°C to -40°C.

According to the present disclosure, the bonding layer contains the acrylate crosslinked polymer and the styrene-acrylate crosslinked copolymer but does not contain the vinylidene fluoride-hexafluoropropylene copolymer, and the weight ratio of the acrylate crosslinked polymer to the styrene-acrylate crosslinked copolymer is 1:(0.05 to 2), optionally 1:(1 to 2); or the bonding layer contains the acrylate crosslinked polymer and the vinylidene fluoride-hexafluoropropylene copolymer but does not contain the styrene-acrylate crosslinked copolymer, and the weight ratio of the acrylate crosslinked polymer to the vinylidene fluoride-hexafluoropropylene copolymer is 1:(0.3 to 25), optionally 1:(0.4 to 19); or the bonding layer contains the acrylate crosslinked polymer, the styrene-acrylate crosslinked copolymer and the vinylidene fluoride-hexafluoropropylene copolymer, and the weight ratio of the acrylate crosslinked polymer to the styrene-acrylate crosslinked copolymer to the vinylidene fluoride-hexafluoropropylene copolymer is 1:(0.01 to 2):(0.3 to 5), optionally 1:(0.05 to 1.5):(0.45 to 3). The inventors of the present disclosure have found through intensive studies that when the above polymers are used in combination according to the above specific ratios, it is very advantageous for the increase of the liquid absorption rate and electrical conductivity of the battery separator and the improvement of the processability.

According to an implementation of the present disclosure, the bonding layer contains the first acrylate crosslinked polymer, the second acrylate crosslinked polymer and the styrene-acrylate crosslinked copolymer but does not contain the vinylidene fluoride-hexafluoropropylene copolymer, and the weight ratio of the first acrylate crosslinked polymer to the second acrylate crosslinked polymer to the styrene-acrylate crosslinked copolymer is (5 to 10):1:(10 to 13); or the bonding layer contains the first acrylate crosslinked polymer, the second acrylate crosslinked polymer and the vinylidene fluoride-hexafluoropropylene copolymer but does not contain the styrene-acrylate crosslinked copolymer, and the weight ratio of the first acrylate crosslinked polymer to the second acrylate crosslinked polymer to the vinylidene fluoride-hexafluoropropylene copolymer is (5 to 15):1:(5 to 12); or the bonding layer contains the second acrylate crosslinked polymer and the vinylidene fluoride-hexafluoropropylene copolymer but does not contain the styrene-acrylate crosslinked copolymer, and the weight ratio of the second acrylate crosslinked polymer to the vinylidene fluoride-hexafluoropropylene copolymer is 1:(5 to 20); or the bonding layer contains the second acrylate crosslinked polymer, the styrene-acrylate crosslinked copolymer and the vinylidene fluoride-hexafluoropropylene copolymer, and the weight ratio of the second acrylate crosslinked polymer to the styrene-acrylate crosslinked copolymer to the vinylidene fluoride-hexafluoropropylene copolymer is 1:(0.5 to 2):(1 to 5); or the bonding layer contains the third acrylate crosslinked polymer, the styrene-acrylate crosslinked copolymer and the vinylidene fluoride-hexafluoropropylene copolymer, and the weight ratio of the third acrylate crosslinked polymer to the styrene-acrylate crosslinked copolymer to the vinylidene fluoride-hexafluoropropylene copolymer is 1:(0.5 to 2):(1 to 5); or the bonding layer contains the first acrylate crosslinked polymer, the second acrylate crosslinked polymer, the styrene-acrylate crosslinked copolymer and the vinylidene fluoride-hexafluoropropylene copolymer, and the weight ratio of the first acrylate crosslinked polymer to the second acrylate crosslinked polymer to the styrene-acrylate crosslinked copolymer to the vinylidene fluoride-hexafluoropropylene copolymer is (10 to 15):1:(0.5 to 2): (5 to 10);

wherein the first acrylate crosslinked polymer contains 70-80 wt% of polymethyl methacrylate segment, 2-10 wt% of polyethyl acrylate segment, 10-20 wt% of polybutyl acrylate segment and 2-10 wt% of polyacrylic acid segment, the second acrylate crosslinked polymer contains 30-40 wt% of polymethyl methacrylate segment, 2-10 wt% of polyethyl acrylate segment, 50-60 wt% of polybutyl acrylate segment and 2-10 wt% of polyacrylic acid segment, the third acrylate crosslinked polymer contains 50-80 wt% of polymethyl methacrylate segment, 2-10 wt% of polyethyl acrylate segment, 15-40 wt% of polybutyl acrylate segment and 2-10 wt% of polyacrylic acid segment, the styrene-acrylate crosslinked copolymer contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment, and the vinylidene fluoride-hexafluoropropylene copolymer contains 80-98 wt% of polyvinylidene fluoride segment and 2-20 wt% of polyhexafluoropropylene segment; and the glass transition temperature of the first acrylate crosslinked polymer is 50°C to 60°C, the glass transition temperature of the second acrylate crosslinked polymer is -20°C to -5°C, the glass transition temperature of the third acrylate crosslinked polymer is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

According to the present disclosure, optionally, the bonding layer further contains at least one of an acrylonitrile-acrylate copolymer, a chloroprene-acrylonitrile copolymer and a styrene-butadiene copolymer. When the bonding layer further contains the acrylonitrile-acrylate copolymer, it is advantageous to increase the ionic conductivity of the battery separator inside the battery; and when the bonding layer further contains the chloroprene-acrylonitrile copolymer and/or the styrene-butadiene copolymer, it is advantageous to reduce the liquid absorption rate of the battery separator, so that the liquid absorption rate is not too high, because a too high liquid absorption rate will cause the positive and negative electrodes inside the battery to lack the electrolyte and degrade the battery performance.

When the bonding layer further contains the acrylonitrile-acrylate copolymer, the weight ratio of the acrylonitrile-acrylate copolymer to the acrylate crosslinked polymer is optionally (0.05 to 2):1, for example, (0.08 to 1.85):1. When the bonding layer further contains the chloroprene-acrylonitrile copolymer, the weight ratio of the chloroprene-acrylonitrile copolymer to the acrylate crosslinked polymer is optionally (0.15 to 7):1, for example, (0.2 to 6):1. When the bonding layer further contains the styrene-butadiene copolymer, the weight ratio of the styrene-butadiene copolymer to the acrylate crosslinked polymer is optionally (0.05 to 2):1, for example, (0.08 to 1.85):1.

According to the battery separator provided by the present disclosure, the single-side surface density of the bonding layer is optionally 0.05-0.9 mg/cm$^2$, for example, 0.1-0.6 mg/cm$^2$.

According to the battery separator provided by the present disclosure, the single-side thickness of the bonding layer is optionally 0.1-1 $\mu$m, for example, 0.2-0.6 $\mu$m.

The type of the porous base membrane is not specifically limited in the present disclosure, and may be a conventional option in the art, for example, may be a polymer base membrane or a ceramic base membrane, wherein the ceramic base membrane is the same as the conventional ceramic base membrane in the art, and includes a polymer base membrane and a ceramic layer located on at least one side surface of the polymer base membrane. The above polymer base membrane may be an existing polyolefin membrane. The polyolefin membrane includes a polypropylene (PP) membrane, a polyethylene (PE) membrane, a PE/PP/PE three-layer membrane, and the like. The ceramic layer generally contains ceramic particles and a binder, wherein relative to 100 parts by weight of the ceramic particles, the content of the binder may be 1-10 wt%, optionally 3-7 wt%. The ceramic particles are generally selected from at least

one of $Al_2O_3$, $SiO_2$, $SnO_2$, $ZrO_2$, $TiO_2$, SiC, $Si_3N_4$, CaO, MgO, ZnO, $BaTiO_3$, $LiAlO_2$ and $BaSO_4$. The binder may generally be at least one of a polyacrylate, a polyvinylidene fluoride-hexafluoropropylene copolymer, a polyvinylidene fluoride-trichloroethylene copolymer, a polyacrylonitrile, a polyvinylpyrrolidone, a polyimide, polyvinyl alcohol or the like, optionally the polyacrylate, for example, the polyacrylate having a glass transition temperature of -40°C to 0°C. The polyacrylate having a glass transition temperature of -40°C to 0°C may specifically be a copolymer of monomer units such as butyl acrylate, ethyl acrylate, methyl methacrylate, acrylic acid and the like. When the polyacrylate having a glass transition temperature of -40°C to 0°C is used as the binder, the processability can be improved without affecting the bonding strength and gas permeability of the ceramic base membrane, and the industrial application prospect is widened. Further, the single-side thickness of the ceramic layer may be 0.1-3 μm, optionally 0.5-2 μm.

According to the battery separator provided by the present disclosure, the total thickness of the porous base membrane may generally be 9-22 μm, optionally 9-11 μm.

A preparation method of the battery separator provided by the present disclosure includes: attaching a slurry containing a self-crosslinked pure acrylic emulsion and a self-crosslinked styrene-acrylic emulsion and/or a vinylidene fluoride-hexafluoropropylene copolymer emulsion to at least one side surface of a porous base membrane, and then drying to form a bonding layer having a porosity of 40-65% on at least one side surface of the porous base membrane.

The self-crosslinked pure acrylic emulsion refers to an emulsion obtained by emulsion polymerization of a reactive acrylate monomer. The degree of crosslinking of the acrylate crosslinked polymer in the self-crosslinked pure acrylic emulsion may be 2-30%, optionally 5-20%. Further, the glass transition temperature of the acrylate crosslinked polymer in the self-crosslinked pure acrylic emulsion is optionally -20°C to 60°C, for example, -12°C to 54°C. According to an implementation of the present disclosure, the self-crosslinked pure acrylic emulsion is a mixture of a first self-crosslinked pure acrylic emulsion and a second self-crosslinked pure acrylic emulsion and/or a third self-crosslinked pure acrylic emulsion, or the second self-crosslinked pure acrylic emulsion, or the third self-crosslinked pure acrylic emulsion; the acrylate crosslinked polymer in the first self-crosslinked pure acrylic emulsion contains 70-80 wt% of polymethyl methacrylate segment, 2-10 wt% of polyethyl acrylate segment, 10-20 wt% of polybutyl acrylate segment and 2-10 wt% of polyacrylic acid segment, the acrylate crosslinked polymer in the second self-crosslinked pure acrylic emulsion contains 30-40 wt% of polymethyl methacrylate segment, 2-10 wt% of polyethyl acrylate segment, 50-60 wt% of polybutyl acrylate segment and 2-10 wt% of polyacrylic acid segment, and the acrylate crosslinked polymer in the third self-crosslinked pure acrylic emulsion contains 50-80 wt% of polymethyl methacrylate segment, 2-10 wt% of polyethyl acrylate segment, 15-40 wt% of polybutyl acrylate segment and 2-10 wt% of polyacrylic acid segment; and the glass transition temperature of the acrylate crosslinked polymer in the first self-crosslinked pure acrylic emulsion is 50°C to 60°C, the glass transition temperature of the acrylate crosslinked polymer in the second self-crosslinked pure acrylic emulsion is -20°C to -5°C, and the glass transition temperature of the acrylate crosslinked polymer in the third self-crosslinked pure acrylic emulsion is 30°C to 50°C.

The self-crosslinked styrene-acrylic emulsion refers to an emulsion obtained by copolymerization of a styrene monomer and a reactive acrylate monomer. Wherein the weight ratio of a styrene structural unit to an acrylate structural unit in the styrene-acrylate copolymer may be (0.5 to 2):1, optionally (0.67 to 1.5):1. The degree of crosslinking of the styrene-acrylate crosslinked copolymer in the self-crosslinked styrene-acrylic emulsion may be 2-30%, optionally 5-20%. Further, the glass transition temperature of the styrene-acrylate crosslinked copolymer in the self-crosslinked styrene-acrylic emulsion is optionally -30°C to 50°C, for example, -20°C to 50°C. According to an implementation of the present disclosure, the styrene-acrylate crosslinked copolymer in the self-crosslinked styrene-acrylic emulsion contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment; and the glass transition temperature of the styrene-acrylate crosslinked copolymer is 15°C to 30°C.

The glass transition temperature of the vinylidene fluoride-hexafluoropropylene copolymer in the vinylidene fluoride-hexafluoropropylene copolymer emulsion is optionally -65°C to -40°C, for example, -60°C to -40°C. According to an implementation of the present disclosure, the vinylidene fluoride-hexafluoropropylene copolymer in the vinylidene fluoride-hexafluoropropylene copolymer emulsion contains 80-98 wt% of polyvinylidene fluoride segment and 2-20 wt% of polyhexafluoropropylene segment, optionally contains 90-96 wt% of polyvinylidene fluoride segment and 4-10 wt% of polyhexafluoropropylene segment; and the glass transition temperature of the vinylidene fluoride-hexafluoropropylene copolymer is optionally -60°C to -40°C.

The vinylidene fluoride-hexafluoropropylene copolymer emulsion can be obtained commercially, or can be obtained by various existing methods, or can be obtained by preparing an emulsion from vinylidene fluoride-hexafluoropropylene copolymer powder. According to a specific implementation of the present disclosure, the vinylidene fluoride-hexafluoropropylene copolymer emulsion is prepared by the following method:

(1) dissolving a dispersant in water, and selectively adjusting the pH value to obtain an aqueous solution A of the dispersant; and
(2) slowly adding the vinylidene fluoride-hexafluoropropylene copolymer powder to the aqueous solution A of the dispersant under stirring, and after the addition of the vinylidene fluoride-hexafluoropropylene copolymer powder is finished, stirring the mixture at a low speed and then at a high speed, and finally, uniformly dispersing the mixture under high pressure to form the vinylidene fluoride-hexafluoropropylene copolymer emulsion.

The dispersant is a water-soluble polymer dispersant, and includes an ionic type (polyelectrolyte) and a nonionic type. Wherein the ionic dispersant is a polycarboxylic acid dispersant, which is obtained by homopolymerizing a carboxyl-containing vinyl monomer (e.g., acrylic acid, maleic anhydride, etc.) or copolymerizing with other monomers, and then performing neutralization with a base for alcohol esterification. Examples of the ionic dispersant include, but not limited to, polyacrylic acid (PAA), polyethyleneimine (PEI), cetyltrimethylammonium bromide (CTAB), polyamide, polyacrylamide (PAM), an acrylic-acrylate copolymer, an acrylic-acrylamide copolymer [P(AA/AM)], an ammonium acrylate-acrylate copolymer, a styrene-maleic anhydride copolymer (SMA), a styrene-acrylic copolymer, an acrylic-maleic anhydride copolymer, a maleic anhydride-acrylamide copolymer, etc. The nonionic dispersant includes polyethylene glycol (PEG), polyvinyl alcohol (PVA), polyvinylpyrrolidone (PVP), fatty alcohol polyoxyethylene ether (JFC), etc. The weight average molecular weight of the dispersant is 100-500 000 g/mol, optionally 1000-100000 g/mol. The concentration of the aqueous solution A of the dispersant is 0.01-10 wt%, optionally 0.05-5 wt%, for example, 0.1-2 wt%. The dispersant is used in an amount of 0.05-10 wt%, optionally 0.1-6 wt%, for example, 0.1-2 wt%, based on the amount of the vinylidene fluoride-hexafluoropropylene copolymer powder. When the ionic dispersant used is an anionic polymer (e.g., PAM), the solution is adjusted to pH=8-9, so that the anionic polymer is completely dissociated, thereby effectively protecting the vinylidene fluoride-hexafluoropropylene copolymer powder and enabling the vinylidene fluoride-hexafluoropropylene copolymer powder to be stably dispersed in the aqueous phase. When the ionic dispersant used is a cationic polymer (e.g., PEI, CTAB), the solution is adjusted to pH=4-5, so that the cationic polymer is well dissociated, thereby effectively protecting the vinylidene fluoride-hexafluoropropylene copolymer powder and enabling the vinylidene fluoride-hexafluoropropylene copolymer powder to be stably dispersed in the aqueous phase. When the dispersant used is a nonionic polymer dispersant, the pH value of the solution is not adjusted.

According to an implementation of the present disclosure, the slurry contains the self-crosslinked pure acrylic emulsion and the self-crosslinked styrene-acrylic emulsion but does not contain the vinylidene fluoride-hexafluoropropylene copolymer emulsion, and the weight ratio of solid content of the self-crosslinked pure acrylic emulsion to the self-crosslinked styrene-acrylic emulsion is 1:(0.05 to 2), optionally 1:(1 to 2); or the slurry contains the self-crosslinked pure acrylic emulsion and the vinylidene fluoride-hexafluoropropylene copolymer emulsion but does not contain the self-crosslinked styrene-acrylic emulsion, and the weight ratio of solid content of the self-crosslinked pure acrylic emulsion to the vinylidene fluoride-hexafluoropropylene copolymer emulsion is 1:(0.3 to 25), optionally 1:(0.4 to 19); or the slurry contains the self-crosslinked pure acrylic emulsion, the self-crosslinked styrene-acrylic emulsion and the vinylidene fluoride-hexafluoropropylene copolymer emulsion, and the weight ratio of solid content of the self-crosslinked pure acrylic emulsion to the self-crosslinked styrene-acrylic emulsion to the vinylidene fluoride-hexafluoropropylene copolymer emulsion is 1:(0.05 to 2):(0.30 to 5), optionally 1:(0.05 to 1.5):(0.45 to 3). The inventors of the present disclosure have found through intensive studies that when the above polymer emulsions are used in combination according to the above specific ratios, it is very advantageous for the increase of the liquid absorption rate and electrical conductivity of the ceramic separator and the improvement of the processability.

According to an implementation of the present disclosure, the slurry contains the first self-crosslinked pure acrylic emulsion, the second self-crosslinked pure acrylic emulsion and the self-crosslinked styrene-acrylic emulsion but does not contain the vinylidene fluoride-hexafluoropropylene copolymer emulsion, and the weight ratio of solid content of the first self-crosslinked pure acrylic emulsion to the second self-crosslinked pure acrylic emulsion to the self-crosslinked styrene-acrylic emulsion is (5 to 10):1 :(10 to 13); or

the slurry contains the first self-crosslinked pure acrylic emulsion, the second self-crosslinked pure acrylic emulsion and the vinylidene fluoride-hexafluoropropylene copolymer emulsion but does not contain the self-crosslinked styrene-acrylic emulsion, and the weight ratio of solid content of the first self-crosslinked pure acrylic emulsion to the second self-crosslinked pure acrylic emulsion to the vinylidene fluoride-hexafluoropropylene copolymer emulsion is (5 to 15):1:(5 to 12); or

the slurry contains the second self-crosslinked pure acrylic emulsion and the vinylidene fluoride-hexafluoropropylene copolymer emulsion but does not contain the self-crosslinked styrene-acrylic emulsion, and the weight ratio of solid content of the second self-crosslinked pure acrylic emulsion to the vinylidene fluoride-hexafluoropropylene copolymer emulsion is 1:(5 to 20); or

the slurry contains the second self-crosslinked pure acrylic emulsion, the self-crosslinked styrene-acrylic emulsion and the vinylidene fluoride-hexafluoropropylene copolymer emulsion, and the weight ratio of solid content of the second self-crosslinked pure acrylic emulsion to the self-crosslinked styrene-acrylic emulsion to the vinylidene fluoride-hexafluoropropylene copolymer emulsion is 1 :(0.5 to 2):(1 to 5); or

the slurry contains the third self-crosslinked pure acrylic emulsion, the self-crosslinked styrene-acrylic emulsion and the vinylidene fluoride-hexafluoropropylene copolymer emulsion, and the weight ratio of solid content of the third self-crosslinked pure acrylic emulsion to the self-crosslinked styrene-acrylic emulsion to the vinylidene fluoride-hexafluoropropylene copolymer emulsion is 1 :(0.5 to 2):(1 to 5); or

the slurry contains the first self-crosslinked pure acrylic emulsion, the second self-crosslinked pure acrylic emulsion, the self-crosslinked styrene-acrylic emulsion and the vinylidene fluoride-hexafluoropropylene copolymer emulsion, and the weight ratio of solid content of the first self-crosslinked pure acrylic emulsion to the second self-crosslinked pure acrylic emulsion to the self-crosslinked styrene-acrylic emulsion to the vinylidene fluoride-hexafluoropropylene copolymer emulsion is (10 to 15):1:(0.5 to 2):(5 to 10);

the acrylate crosslinked polymer in the first self-crosslinked pure acrylic emulsion contains 70-80 wt% of polymethyl methacrylate segment, 2-10 wt% of polyethyl acrylate segment, 10-20 wt% of polybutyl acrylate segment and 2-10 wt% of polyacrylic acid segment, the acrylate crosslinked polymer in the second self-crosslinked pure acrylic emulsion contains 30-40 wt% of polymethyl methacrylate segment, 2-10 wt% of polyethyl acrylate segment, 50-60 wt% of polybutyl acrylate segment and 2-10 wt% of polyacrylic acid segment, the acrylate crosslinked polymer in the third self-crosslinked pure acrylic emulsion contains 50-80 wt% of polymethyl methacrylate segment, 2-10 wt% of polyethyl acrylate segment, 15-40 wt% of polybutyl acrylate segment and 2-10 wt% of polyacrylic acid segment, the styrene-acrylate crosslinked copolymer in the self-crosslinked styrene-acrylic emulsion contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment, and the vinylidene fluoride-hexafluoropropylene copolymer in the vinylidene fluoride-hexafluoropropylene copolymer emulsion contains 80-98 wt% of polyvinylidene fluoride segment and 2-20 wt% of polyhexafluoropropylene segment; and the glass transition temperature of the acrylate crosslinked polymer in the first self-crosslinked pure acrylic emulsion is 50°C to 60°C, the glass transition temperature of the acrylate crosslinked polymer in the second self-crosslinked pure acrylic emulsion is -20°C to -5°C, the glass transition temperature of the acrylate crosslinked polymer in the third self-crosslinked pure acrylic emulsion is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

According to the present disclosure, optionally, the slurry further contains at least one of an acrylonitrile-acrylate copolymer emulsion, an chloroprene-acrylonitrile emulsion and a styrene-butadiene latex; when the slurry further contains the acrylonitrile-acrylate copolymer emulsion, it is advantageous to increase the ionic conductivity of the battery separator inside the battery; and when the slurry further contains the chloroprene-acrylonitrile emulsion and/or the styrene-butadiene latex, it is advantageous to reduce the liquid absorption rate of the battery separator, so that the liquid absorption rate is not too high, because a too high liquid absorption rate will cause the positive and negative electrodes inside the battery to lack the electrolyte and degrade the battery performance.

When the slurry further contains the acrylonitrile-acrylate copolymer emulsion, the weight ratio of the solid content of the acrylonitrile-acrylate copolymer emulsion to the solid content of the self-crosslinked pure acrylic emulsion is optionally (0.05 to 2):1, for example, (0.08 to 1.85):1. When the slurry further contains the chloroprene-acrylonitrile emulsion, the weight ratio of the solid content of the chloroprene-acrylonitrile emulsion to the solid content of the self-crosslinked pure acrylic emulsion is (0.15 to 7):1, for example (0.2 to 6):1. When the slurry further contains the styrene-butadiene latex, the weight ratio of the solid content of the styrene-butadiene latex to the solid content of the self-crosslinked pure acrylic emulsion is (0.05 to 2):1, for example, (0.08 to 1.85):1.

Further, in order to facilitate attachment of the slurry to the porous base membrane, optionally, the total solid content of the slurry is 0.5-25 wt%, such as 1-20 wt%, for example 1-10 wt%.

The attaching method optionally can adopt spraying method and/or screen printing method. By forming a discontinuous coating by spraying and/or screen printing to directly form the porous membrane having the above porosity, it is possible to prepare a porous (discontinuous) self-crosslinked polymer coating without requiring a phase separation process.

The conditions of the spraying and screen printing of the present disclosure are not particularly limited. For example, the spraying temperature is optionally 30°C to 80°C, for example, 40°C to 75°C. The screen printing temperature is optionally 30°C to -80°C, for example, 40°C to 75°C.

The amount of the slurry is optional such that the single-side thickness of the formed bonding layer is 0.1-1 μm, for example, 0.2-0.6 μm.

The temperature for drying the slurry in the present disclosure is not particularly limited, optionally 30°C to 80°C, for example, 40°C to 75°C.

The type and thickness of the porous base membrane have been described above and will not be described herein.

The present disclosure further provides a battery separator prepared by the above method.

In addition, the present disclosure further provides a lithium-ion battery, including a positive electrode plate, a negative electrode plate, an electrolyte and a battery separator, wherein the battery separator is the above battery separator.

The electrolyte is well known to those skilled in the art and typically consists of an electrolyte lithium salt and an organic solvent. Wherein the electrolyte lithium salt is a dissociable lithium salt, and for example, may be at least one selected from the group consisting of lithium hexafluorophosphate ($LiPF_6$), lithium perchlorate ($LiClO_4$), lithium tetrafluoroborate ($LiBF_4$) and the like, and the organic solvent may be at least one selected from the group consisting of ethylene carbonate (EC), propylene carbonate (PC), dimethyl carbonate (DMC), ethyl methyl carbonate (EMC), diethyl carbonate (DEC), vinylene carbonate (VC) and the like. Optionally, the concentration of the electrolyte lithium salt in the electrolyte is 0.8-1.5 mol/L.

The positive electrode plate is prepared by coating a slurry prepared from a positive electrode material for a lithium-ion battery, a conductive agent and a binder onto an aluminum foil. The positive electrode material used includes any positive electrode material usable for a lithium-ion battery, for example, at least one of lithium cobalt oxide ($LiCoO_2$), lithium nickel oxide ($LiNiO_2$), lithium manganese oxide ($LiMn_2O_4$), lithium iron phosphate ($LiFePO_4$) and the like.

The negative electrode plate is prepared by coating a slurry prepared from a negative electrode material for a lithium-ion battery, a conductive agent and a binder onto a copper foil. The negative electrode material used includes any negative electrode material usable for a lithium-ion battery, for example, at least one of graphite, soft carbon, hard carbon and the like.

The main improvement of the lithium-ion battery provided by the present disclosure is that a new ceramic separator is used, and the arrangement manner (connection manner) of the positive electrode plate, the negative electrode plate, the battery separator and the electrolyte can be the same as the existing technology. This is known to those skilled in the art and will not be described herein.

The lithium-ion battery provided by the present disclosure has the advantages of high hardness, good cycle performance, long service life, good rate charging-discharging performance and good high-temperature performance.

The preparation method of the lithium-ion battery provided by the present disclosure includes: sequentially laminating or winding a positive electrode plate, a battery separator and a negative electrode plate into a pole core, then injecting an electrolyte into the pole core and sealing, wherein the battery separator is the above battery separator.

Wherein the material or composition of the positive electrode plate, the negative electrode plate and the electrolyte has been described above, and will not be described herein.

The present disclosure will be described in detail below by way of embodiments.

In the following embodiments and comparative embodiments, the physicochemical parameters of the raw materials are as follows:

(1) Composition of self-crosslinked pure acrylic emulsion:

  1.1) 1040: 15 wt% of polybutyl acrylate segment, 75 wt% of polymethyl methacrylate segment, 5 wt% of polyethyl acrylate segment and 5 wt% of polyacrylic acid segment, glass transition temperature Tg=54°C, solid content is 50 wt%, Shanghai Aigao Chemical Co., Ltd.;

  1.2) 1005: 55 wt% of polybutyl acrylate segment, 35 wt% of polymethyl methacrylate segment, 5 wt% of polyethyl acrylate segment and 5 wt% of polyacrylic acid segment, glass transition temperature Tg=-12°C, solid content is 50 wt%, Shanghai Aigao Chemical Co., Ltd.; and

  1.3) 1020: 25 wt% of polybutyl acrylate segment, 65 wt% of polymethyl methacrylate segment, 5 wt% of polyethyl acrylate segment and 5 wt% of polyacrylic acid segment, glass transition temperature Tg=40°C, solid content is 50 wt%, Shanghai Aigao Chemical Co., Ltd.

(2) Composition of self-crosslinked styrene-acrylic emulsion:
S601: 45 wt% of polystyrene segment, 35 wt% of polybutyl acrylate segment, 10 wt% ofpolymethyl methacrylate segment, 5 wt% of polyethyl acrylate segment and 5 wt% of polyacrylic acid segment, glass transition temperature Tg=22°C, solid content is 50 wt%, Shanghai Aigao Chemical Co., Ltd.
(3) Vinylidene fluoride-hexafluoropropylene copolymer emulsion:
10278: 95 wt% of polyvinylidene fluoride segment and 5 wt% of polyhexafluoropropylene segment, weight average molecular weight Mw=450000, glass transition temperature is -55°C, solid content is 30 wt%, Arkema.
(4) Vinylidene fluoride-hexafluoropropylene copolymer powder:

Kynar powerflex LBG: The composition is the same as 10278, the difference is that it is dried and purified, Arkema.

In the following embodiments and comparative embodiments, the surface density of the bonding layer was measured by the following method: respectively taking a 0.2m×0.2m PTFE plate and a PTFE plate containing the bonding layer, and respectively weighing the weight of $M_0$(g) and M(g), surface density = [(M-$M_0$)/0.04] $g/m^2$.

Embodiment 1

The present embodiment is for explaining a battery separator and a lithium-ion battery, and preparation methods thereof provided by the present disclosure.

(1) A self-crosslinked pure acrylic emulsion (Shanghai Aigao Chemical Co., Ltd., Designation 1040), a self-crosslinked pure acrylic emulsion (Shanghai Aigao Chemical Co., Ltd., Designation 1005) and a self-crosslinked styrene-acrylic emulsion (Shanghai Aigao Chemical Co., Ltd., Designation S601) were mixed at a mass ratio of solid content of 9:1:10, and an appropriate amount of water was added thereto and uniformly stirred to prepare a slurry having a total solid content of 1 wt%.

(2) The above slurry was sprayed (with the spraying temperature of 40°C) onto two side surfaces of a CCL/PE/CCL (1 $\mu$m/9 $\mu$m/1 $\mu$m, wherein the PE layer was purchased from SK Corporation of Japan and the designation was BD1201, the CCL layer was composed of 95 wt% of alumina ceramic particles and 5 wt% of polyacrylate having a glass transition temperature of -20°C, the same below) base membrane and one side surface of a PTFE plate, and then dried at 50°C to respectively obtain a CCL/PE/CCL base membrane (designated as battery separator Sa1) including a porous self-crosslinked polymer membrane (bonding layer, the same below) Sa1 and a porous self-crosslinked polymer membrane Sb1 on the PTFE plate, wherein the single-side surface density of both the porous self-crosslinked polymer membranes was 0.1 g/m$^2$, and the single-side thickness was 0.2 $\mu$m.

(3) LiCoO$_2$, a PVDF binder and carbon black were prepared into a slurry in a mass ratio of 100:0.8:0.5, coated on an aluminum foil, and dried to prepare a LiCoO$_2$ positive electrode plate having a thickness of 0.114 mm, the same below. Styrene-butadiene rubber (SBR) and carboxymethyl cellulose (CMC) were dissolved in water, and stirred with artificial graphite and a conductive agent at a mass ratio of 2.5:1.5:90:6 at a high speed at room temperature for 3.5 hours, and the stirred material was coated on a copper foil and dried to prepare a graphite negative electrode plate having a thickness of 0.135 mm, the same below.

In a dry room, the LiCoO$_2$ positive electrode plate, the graphite negative electrode plate and the battery separator Sa1 were wound to prepare an SL435573 LiCoO$_2$/graphite pouch polymer lithium-ion battery, which was designated as D1.

Embodiment 2

The present embodiment is for explaining a battery separator and a lithium-ion battery, and preparation methods thereof provided by the present disclosure.

(1) A vinylidene fluoride-hexafluoropropylene copolymer emulsion (Arkema, Designation 10278), a self-crosslinked pure acrylic emulsion (Shanghai Aigao Chemical Co., Ltd., Designation 1005) and a self-crosslinked styrene-acrylic emulsion (Shanghai Aigao Chemical Co., Ltd., Designation S601) were mixed at a mass ratio of solid content of 12:4:4, and an appropriate amount of water was added thereto and uniformly stirred to prepare a slurry having a total solid content of 5 wt%.

(2) The above slurry was screen-printed (with the temperature of 75°C) onto two side surfaces of a CCL/PE/CCL (1 $\mu$m/9 $\mu$m/1 $\mu$m) base membrane and one side surface of a PTFE plate, and then dried at 50°C to respectively obtain a CCL/PE/CCL base membrane (designated as ceramic separator Sa2) including a porous self-crosslinked polymer membrane Sa2 and a porous self-crosslinked polymer membrane Sb2 on the PTFE plate, wherein the single-side surface density of both the porous self-crosslinked polymer membranes was 0.2 g/m$^2$, and the single-side thickness was 0.4 $\mu$m.

(3) In a dry room, the LiCoO$_2$ positive electrode plate, the graphite negative electrode plate and the battery separator Sa2 were wound to prepare an SL435573 LiCoO$_2$/graphite pouch polymer lithium-ion battery, which was designated as D2.

Embodiment 3

The present embodiment is for explaining a battery separator and a lithium-ion battery, and preparation methods thereof provided by the present disclosure.

(1) A self-crosslinked pure acrylic emulsion (Shanghai Aigao Chemical Co., Ltd., Designation 1040), a vinylidene fluoride-hexafluoropropylene copolymer emulsion (Arkema, Designation 10278), a self-crosslinked pure acrylic emulsion (Shanghai Aigao Chemical Co., Ltd., Designation 1005) and a self-crosslinked styrene-acrylic emulsion (Shanghai Aigao Chemical Co., Ltd., Designation S601) were mixed at a mass ratio of solid content of 12:6:1:1, and an appropriate amount of water was added thereto and uniformly stirred to prepare a slurry having a total solid content of 10 wt%.

(2) The above slurry was sprayed (with the spraying temperature of 58°C) onto two side surfaces of a PE (9 μm) base membrane and one side surface of a PTFE plate, and then dried at 50°C to respectively obtain a PE base membrane (designated as battery separator Sa3) including a porous self-crosslinked polymer membrane Sa3 and a porous self-crosslinked polymer membrane Sb3 on the PTFE plate, wherein the single-side surface density of both the porous self-crosslinked polymer membranes was 0.3 g/m², and the single-side thickness was 0.6 μm.

(3) In a dry room, the $LiCoO_2$ positive electrode plate, the graphite negative electrode plate and the battery separator Sa3 were wound to prepare an SL435573 $LiCoO_2$/graphite pouch polymer lithium-ion battery, which was designated as D3.

Embodiment 4

The present embodiment is for explaining a battery separator and a lithium-ion battery, and preparation methods thereof provided by the present disclosure.

(1) A self-crosslinked pure acrylic emulsion (Shanghai Aigao Chemical Co., Ltd., Designation 1040), a vinylidene fluoride-hexafluoropropylene copolymer emulsion (Arkema, Designation 10278) and a self-crosslinked pure acrylic emulsion (Shanghai Aigao Chemical Co., Ltd., Designation 1005) were mixed at a mass ratio of solid content of 12.7:6.3:1, and an appropriate amount of water was added thereto and uniformly stirred to prepare a slurry having a total solid content of 1 wt%.

(2) The above slurry was screen-printed (with the temperature of 40°C) onto two side surfaces of a PE/CCL (9 μm/2 μm) base membrane and one side surface of a PTFE plate, and then dried at 50°C to respectively obtain a PE/CCL base membrane (designated as ceramic separator Sa4) including a porous self-crosslinked polymer membrane Sa4 and a porous self-crosslinked polymer membrane Sb4 on the PTFE plate, wherein the single-side surface density of both the porous self-crosslinked polymer coatings was 0.1 g/m², and the single-side thickness was 0.2 μm.

(3) In a dry room, the $LiCoO_2$ positive electrode plate, the graphite negative electrode plate and the battery separator Sa4 were wound to prepare an SL435573 $LiCoO_2$/graphite pouch polymer lithium-ion battery, which was designated as D4, wherein the CCL faces the positive electrode plate.

Embodiment 5

The present embodiment is for explaining a battery separator and a lithium-ion battery, and preparation methods thereof provided by the present disclosure.

(1) A self-crosslinked pure acrylic emulsion (Shanghai Aigao Chemical Co., Ltd., Designation 1040), a self-crosslinked pure acrylic emulsion (Shanghai Aigao Chemical Co., Ltd., Designation 1005) and a self-crosslinked styrene-acrylic emulsion (Shanghai Aigao Chemical Co., Ltd., Designation S601) were mixed at a mass ratio of solid content of 6:1:13, and an appropriate amount of water was added thereto and uniformly stirred to prepare a slurry having a total solid content of 5 wt%.

(2) The above slurry was sprayed (with the spraying temperature of 75°C) onto two side surfaces of a PE (9 μm) base membrane and one side surface of a PTFE plate, and then dried at 50°C to respectively obtain a PE base membrane (designated as battery separator Sa5) including a porous self-crosslinked polymer membrane Sa5 and a porous self-crosslinked polymer membrane Sb5 on the PTFE plate, wherein the single-side surface density of both the porous self-crosslinked polymer membranes was 0.2 g/m², and the single-side thickness was 0.4 μm.

(3) In a dry room, the $LiCoO_2$ positive electrode plate, the graphite negative electrode plate and the battery separator Sa5 were wound to prepare an SL435573 $LiCoO_2$/graphite pouch polymer lithium-ion battery, which was designated as D5.

Embodiment 6

The present embodiment is for explaining a battery separator and a lithium-ion battery, and preparation methods thereof provided by the present disclosure.

(1) A self-crosslinked pure acrylic emulsion (Shanghai Aigao Chemical Co., Ltd., Designation 1040), a vinylidene fluoride-hexafluoropropylene copolymer emulsion (Arkema, Designation 10278) and a self-crosslinked pure acrylic emulsion (Shanghai Aigao Chemical Co., Ltd., Designation 1005) were mixed at a mass ratio of solid content of 11.4:7.6:1, and an appropriate amount of water was added thereto and uniformly stirred to prepare a slurry having a total solid content of 10 wt%.

(2) The above slurry was screen-printed (with the temperature of 58°C) onto two side surfaces of a CCL (1 μm) base membrane and one side surface of a PTFE plate, and then dried at 50°C to respectively obtain a CCL base membrane (designated as battery separator Sa6) including a porous self-crosslinked polymer membrane Sa6 and a porous self-crosslinked polymer membrane Sb6 on the PTFE plate, wherein the single-side surface density of both the porous self-crosslinked polymer membranes was 0.3 g/m$^2$, and the single-side thickness was 0.6 μm.

(3) In a dry room, the LiCoO$_2$ positive electrode plate, the graphite negative electrode plate and the battery separator Sa6 were wound to prepare an SL435573 LiCoO$_2$/graphite pouch polymer lithium-ion battery, which was designated as D6.

Embodiment 7

The present embodiment is for explaining a battery separator and a lithium-ion battery, and preparation methods thereof provided by the present disclosure.

(1) A self-crosslinked pure acrylic emulsion (Shanghai Aigao Chemical Co., Ltd., Designation 1040), a vinylidene fluoride-hexafluoropropylene copolymer emulsion (Arkema, Designation 10278) and a self-crosslinked pure acrylic emulsion (Shanghai Aigao Chemical Co., Ltd., Designation 1005) were mixed at a mass ratio of solid content of 9.5:9.5:1, and an appropriate amount of water was added thereto and uniformly stirred to prepare a slurry having a total solid content of 1 wt%.

(2) The above slurry was sprayed (with the spraying temperature of 40°C) onto two side surfaces of a PE (9 μm) base membrane and one side surface of a PTFE plate, and then dried at 50°C to respectively obtain a PE base membrane (designated as battery separator Sa7) including a porous self-crosslinked polymer membrane Sa7 and a porous self-crosslinked polymer membrane Sb7 on the PTFE plate, wherein the single-side surface density of both the porous self-crosslinked polymer membranes was 0.1 g/m$^2$, and the single-side thickness was 0.2 μm.

(3) In a dry room, the LiCoO$_2$ positive electrode plate, the graphite negative electrode plate and the battery separator Sa7 were wound to prepare an SL435573 LiCoO$_2$/graphite pouch polymer lithium-ion battery, which was designated as D7.

Embodiment 8 (Reference)

The present embodiment is for explaining a battery separator and a lithium-ion battery, and preparation methods thereof provided by the present disclosure.

(1) A vinylidene fluoride-hexafluoropropylene copolymer emulsion (Arkema, Designation 10278) and a self-crosslinked pure acrylic emulsion (Shanghai Aigao Chemical Co., Ltd., Designation 1005) were mixed at a mass ratio of solid content of 19:1, and an appropriate amount of water was added thereto and uniformly stirred to prepare a slurry having a total solid content of 5 wt%.

(2) The above slurry was screen-printed (with the temperature of 75°C) onto two side surfaces of a CCL (1 μm) base membrane and one side surface of a PTFE plate, and then dried at 50°C to respectively obtain a CCL base membrane (designated as battery separator Sa8) including a porous self-crosslinked polymer membrane Sa8 and a porous self-crosslinked polymer membrane Sb8 on the PTFE plate, wherein the single-side surface density of both the porous self-crosslinked polymer membranes was 0.2 g/m$^2$, and the single-side thickness was 0.4 μm.

(3) In a dry room, the LiCoO$_2$ positive electrode plate, the graphite negative electrode plate and the battery separator Sa8 were wound to prepare an SL435573 LiCoO$_2$/graphite pouch polymer lithium-ion battery, which was designated as D8.

Embodiment 9 (Reference)

The present embodiment is for explaining a battery separator and a lithium-ion battery, and preparation methods thereof provided by the present disclosure.

(1) A vinylidene fluoride-hexafluoropropylene copolymer emulsion (Arkema, Designation 10278) and a self-crosslinked pure acrylic emulsion (Shanghai Aigao Chemical Co., Ltd., Designation 1005) were mixed at a mass ratio of solid content of 18:2, and an appropriate amount of water was added thereto and uniformly stirred to prepare a slurry having a total solid content of 10 wt%.

(2) The above slurry was sprayed (with the spraying temperature of 58°C) onto two side surfaces of a PE (9 μm) base membrane and one side surface of a PTFE plate, and then dried at 50°C to respectively obtain a PE base membrane (designated as battery separator Sa9) including a porous self-crosslinked polymer membrane Sa9 and a porous self-crosslinked polymer membrane Sb9 on the PTFE plate, wherein the single-side surface density of both the porous self-crosslinked polymer membranes was 0.3 g/m$^2$, and the single-side thickness was 0.6 $\mu$m.

(3) In a dry room, the LiCoO$_2$ positive electrode plate, the graphite negative electrode plate and the battery separator Sa9 were wound to prepare an SL435573 LiCoO$_2$/graphite pouch polymer lithium-ion battery, which was designated as D9.

Embodiment 10

The present embodiment is for explaining a battery separator and a lithium-ion battery, and preparation methods thereof provided by the present disclosure.

The battery separator and the lithium-ion battery were prepared according to the method of Embodiment 1. The difference is that the slurry forming the bonding layer further contained an acrylonitrile-acrylate copolymer emulsion (Shanghai Aigao Chemical Co., Ltd., Designation A1030, included 15 wt% of polyacrylonitrile segment, 30 wt% of polybutyl acrylate segment, 45 wt% of polymethyl methacrylate segment, 5 wt% of polyethyl acrylate segment and 5 wt% of polyacrylic acid segment, glass transition temperature Tg=28°C, solid content was 50 wt%), the weight ratio of the solid content of A1030 to the total solid content of 1040 and 1005 was 1:1, and a CCL/PE/CCL base membrane (designated as battery separator Sa10) including a porous self-crosslinked polymer membrane Sa10, a porous self-crosslinked polymer membrane Sb10 on the PTFE plate and a lithium-ion battery (designated as D10) were obtained, wherein the single-side surface density of both the porous self-crosslinked polymer membranes was 0.1 g/m$^2$, and the single-side thickness was 0.2 $\mu$m.

Embodiment 11

The present embodiment is for explaining a battery separator and a lithium-ion battery, and preparation methods thereof provided by the present disclosure.

The battery separator and the lithium-ion battery were prepared according to the method of Embodiment 1. The difference is that the slurry forming the bonding layer further contained a chloroprene-acrylonitrile emulsion (Shanghai Aigao Chemical Co., Ltd., Designation C056, glass transition temperature Tg=10°C, solid content was 45 wt%), the weight ratio of the solid content of C056 to the total solid content of 1040 and 1005 was 3:1, and a CCL/PE/CCL base membrane (designated as battery separator Sa11) including a porous self-crosslinked polymer membrane Sa11, a porous self-crosslinked polymer membrane Sb11 on the PTFE plate and a lithium-ion battery (designated as D11) were obtained, wherein the single-side surface density of both the porous self-crosslinked polymer membranes was 0.1 g/m$^2$, and the single-side thickness was 0.2 $\mu$m.

Embodiment 12

The present embodiment is for explaining a battery separator and a lithium-ion battery, and preparation methods thereof provided by the present disclosure.

The battery separator and the lithium-ion battery were prepared according to the method of Embodiment 1. The difference is that the slurry forming the bonding layer further contained a styrene-butadiene latex (ZEON CORPORATION of Japan, Designation 9074, glass transition temperature Tg=-61°C, solid content was 50 wt%), the weight ratio of the solid content of 9074 to the total solid content of 1040 and 1005 was 1:1, and a CCL/PE/CCL base membrane (designated as battery separator Sa12) including a porous self-crosslinked polymer membrane Sa12, a porous self-crosslinked polymer membrane Sb12 on the PTFE plate and a lithium-ion battery (designated as D12) were obtained, wherein the single-side surface density of both the porous self-crosslinked polymer membranes was 0.1 g/m$^2$, and the single-side thickness was 0.2 $\mu$m.

Embodiment 13

The present embodiment is for explaining a battery separator and a lithium-ion battery, and preparation methods thereof provided by the present disclosure.

The battery separator and the lithium-ion battery were prepared according to the method of Embodiment 4. The difference is that the vinylidene fluoride-hexafluoropropylene copolymer emulsion was replaced with dispersion liquid of vinylidene fluoride-hexafluoropropylene copolymer powder (glass transition temperature was -55°C, Arkema, Designation Kynar powerflex LBG) having the same solid content. The specific preparation process of the dispersion liquid is as follows:

(1) PVA having a weight average molecular weight of 95000 g/mol was dissolved in water at 100°C to form a 2.5 wt% aqueous solution of PVA.

(2) PAA having a weight average molecular weight of 9000 g/mol and a 10 wt% NaOH solution were mixed with water to form a 5 wt% aqueous solution of PAANa.

(3) The above aqueous solution of PVA, aqueous solution of PAANa and water were mixed under mechanical stirring at a revolving speed of 30 Hz such that the concentrations of PVA and PAANa in water were respectively 0.05 wt%, and after mixing uniformly, an aqueous solution of PVA and PAANa binary dispersants was formed. Kynar powerflex LBG was slowly added to a sufficient amount of the aqueous solution of PVA and PAANa binary dispersants under mechanical stirring at a revolving speed of 30 Hz such that the mass percentage of the dispersant PVA to LBG was 0.4 wt% and the mass percentage of the dispersant PAANa to LBG was 0.4 wt%, so that the solid content of LBG was 12.5 wt%. After the addition was finished, the mixture was firstly stirred at a high speed of 50 Hz for 1 hour, and then homogenized by a homogenizer under a pressure of 80 MPa for 5 times to form the dispersion liquid of LBG.

The obtained slurry was printed onto two side surfaces of a PE/CCL (9 $\mu$m/2 $\mu$m) base membrane and one side surface of a PTFE plate according to the method of Embodiment 4, and then dried at 50°C to respectively obtain a PE/CCL base membrane (designated as battery separator Sa13) including a porous self-crosslinked polymer membrane Sa13 and a porous self-crosslinked polymer membrane Sb13 on the PTFE plate, wherein the single-side surface density of both the porous self-crosslinked polymer membranes was 0.1 g/m$^2$, and the single-side thickness was 0.2 $\mu$m.

The obtained battery separator was subjected to the method of Embodiment 4 to prepare a lithium-ion battery separator, which was designated as D13.

Embodiment 14

The present embodiment is for explaining a battery separator and a lithium-ion battery, and preparation methods thereof provided by the present disclosure.

The battery separator and the lithium-ion battery were prepared according to the method of Embodiment 2. The difference is that the self-crosslinked pure acrylic emulsion 1005 was replaced with the same weight part of the self-crosslinked pure acrylic emulsion 1020.

The obtained slurry was printed onto two side surfaces of a CCL/PE/CCL (1 $\mu$m/9 $\mu$m/1 $\mu$m) base membrane and one side surface of a PTFE plate according to the method of Embodiment 2, and then dried at 50°C to respectively obtain a CCL/PE/CCL base membrane (designated as battery separator Sa14) including a porous self-crosslinked polymer membrane Sa14 and a porous self-crosslinked polymer membrane Sb14 on the PTFE plate, wherein the single-side surface density of both the porous self-crosslinked polymer membranes was 0.2 g/m$^2$, and the single-side thickness was 0.4 $\mu$m.

The obtained battery separator was subjected to the method of Embodiment 2 to prepare a lithium-ion battery separator, which was designated as D14.

Comparative Embodiment 1

The present comparative embodiment is for explaining a battery separator and a lithium-ion battery, and preparation methods thereof as a reference.

The slurry and the bonding layer were prepared according to the method of Embodiment 4. The difference is that the method of forming the bonding layer was knife coating, and a PE/CCL base membrane (designated as battery separator Ra1) including a dense self-crosslinked polymer membrane Ra1 and a dense self-crosslinked polymer membrane Rb1 on the PTFE plate were respectively obtained, wherein the single-side surface density of both the dense self-crosslinked polymer membranes was 1 g/m$^2$, and the single-side thickness was 2 $\mu$m.

(3) In a dry room, the LiCoO$_2$ positive electrode plate, the graphite negative electrode plate and the battery separator Ra1 were wound to prepare an SL435573 LiCoO$_2$/graphite pouch polymer lithium-ion battery, which was designated as DD1.

Comparative Embodiment 2

The present comparative embodiment is for explaining a battery separator and a lithium-ion battery, and preparation methods thereof as a reference.

The slurry and the bonding layer were prepared according to the method of Embodiment 1. The difference is that the method of forming the bonding layer was knife coating, and a CCL/PE/CCL base membrane (designated as battery separator Ra2) including a dense self-crosslinked polymer membrane Ra2 and a dense self-crosslinked polymer membrane Rb2 on the PTFE plate were respectively obtained, wherein the single-side surface density of both the dense self-crosslinked polymer membranes was 1.5 g/m$^2$, and the single-side thickness was 3 $\mu$m.

(3) In a dry room, the LiCoO$_2$ positive electrode plate, the graphite negative electrode plate and the battery separator Ra2 were wound to prepare an SL435573 LiCoO$_2$/graphite pouch polymer lithium-ion battery, which was designated as DD2.

Comparative Embodiment 3

The present comparative embodiment is for explaining a battery separator and a lithium-ion battery, and preparation methods thereof as a reference.

In a dry room, the LiCoO$_2$ positive electrode plate, the graphite negative electrode plate and the PE/CCL (9 um/2 um) separator were wound to prepare an SL435573 LiCoO$_2$/graphite pouch polymer lithium-ion battery, which was designated as DD3, wherein the CCL faces the positive electrode plate.

Test cases

(1) Observation of surface topography:

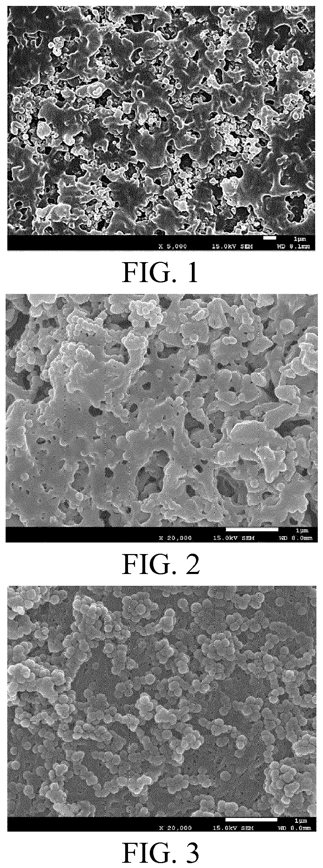

The microtopography of the CCL surfaces of the porous self-crosslinked polymer membranes Sa1 and Sa4 and the PE surface of Sa4 obtained in Embodiment 1 and Embodiment 4 were observed by a scanning electron microscope (SEM, JEOL, JSM-7600FE), and the results are respectively shown in FIG. 1(a), FIG. 1(b) and FIG. 1(c). As can be seen from FIG. 1(a), a self-crosslinked polymer membrane (bonding layer, the same below) with excellent porosity can be formed on the CCL base membrane surface by spraying. As can be seen from FIG. 1(b), a self-crosslinked polymer membrane with excellent porosity can also be formed on the base membrane CCL surface by screen printing. As can be seen from FIG. 1(c), a self-crosslinked polymer membrane with excellent porosity can also be formed on the base membrane PE surface by screen printing, and the self-crosslinked polymer is mostly spherical.

(2) Porosity test:

The porous self-crosslinked polymer membranes Sb1-Sb14 obtained in Embodiments 1-14 were respectively cut into disks having a diameter of 17 mm, the thickness was measured, the disk was weighed and soaked in n-butanol for 2 hours, and then taken out, the liquid on the membrane surface was sucked with filter paper, and the mass of the membrane at this time was weighed. The porosity was calculated according to the following formula:

$$P(\%) = \frac{M - M_0}{\rho_{BuOH} \pi\, r^2 d} \times 100\%$$

P is the porosity, M$_0$ is the mass (g) of the dry membrane, M is the mass (g) after soaking in n-butanol for 2 hours, pBuOH is the density (g/cm$^3$) of the n-butanol, r is the radius (cm) of the membrane, and d is the thickness (cm) of the membrane. The results of the porosity test are listed in Table 1. As can be seen from the results of Table 1, the porosity of the porous self-crosslinked polymer membrane is higher.

(3) Liquid absorption rate test:

The porous self-crosslinked polymer membranes Sb1-Sb14 obtained in Embodiments 1-14 were cut into disks having a diameter of 17 mm, dried, weighed and then soaked in an electrolyte (the electrolyte contained 32.5 wt% of EC (ethylene carbonate), 32.5 wt% of EMC (ethyl methyl carbonate), 32.5 wt% of DMC (dimethyl carbonate), 2.5 wt% of VC (vinylene carbonate) and 1 mol/L of LiPF$_6$ (lithium hexafluorophosphate)) for 24 hours, and then taken out, the liquid on the membrane surface was sucked with filter paper, and the mass of the membrane at this time was weighed. All the operations were carried out in an argon-filled glove box. Then, the liquid absorption rate was calculated according to the following formula:

$$\text{Liquid absorption rate}\% = (Wi\text{-}W)/W \times 100\%$$

Where W is the mass (g) of the dry membrane; Wi is the mass (g) of the dry membrane after soaking in the electrolyte for 24 hours. The results of the liquid absorption rate test are shown in Table 1. As can be seen from the results of Table 1, the liquid absorption rate of the porous self-crosslinked polymer membrane is much higher than that of the dense self-crosslinked polymer membrane.

(4) Test of ionic conductivity of gel polymer electrolyte:

The porous self-crosslinked polymer membranes Sb1-Sb14 obtained in Embodiments 1-14 and the dense self-crosslinked polymer membranes Rb1 and Rb2 obtained in Comparative Embodiments 1-2 were cut into disks having a diameter of 17 mm, dried, placed between two stainless steel (SS) electrodes to absorb a sufficient amount of electrolyte (the electrolyte contained 32.5 wt% of EC (ethylene carbonate), 32.5 wt% of EMC (ethyl methyl carbonate), 32.5 wt% of DMC (dimethyl carbonate), 2.5 wt% of VC (vinylene carbonate) and 1 mol/L of $LiPF_6$ (lithium hexafluorophosphate)), and sealed in a 2016 button cell for AC impedance experiments. The intersection of the linear and real axes is the bulk resistance of the electrolyte, whereby the ionic conductivity can be obtained: $\sigma = L/A \cdot R$ (where L is the thickness (cm) of the membrane, A is the contact area ($cm^2$) between the stainless steel plate and the membrane, and R is the bulk resistance (mS) of the electrolyte). The conductivity results are listed in Table 1. As can be seen from the results in Table 1, the bulk impedance of the porous self-crosslinked GPE is significantly lower than that of the dense self-crosslinked GPE, and the ionic conductivity is significantly increased.

(5) Test of adhesion of membrane to positive and negative electrodes:

A finished battery (hot-pressed at 85°C under a pressure of 1 MPa for 4 hours) obtained in Embodiment 1 was dissected in a fully charged state, and the obtained positive and negative electrode plates and separator were photographed. The results are shown in FIG. 2. As can be seen from FIG. 2, all the black positive electrode material adheres to the porous self-crosslinked separator; and part of the negative electrode material adheres to the porous self-crosslinked separator. It can be seen that the porous self-crosslinked polymer membrane obtained by the present disclosure has a large adhesion to the positive and negative electrodes of the lithium-ion battery, thereby greatly increasing the hardness of the pouch cell.

(6) Test of battery rate performance:

The rate discharge performance test of the graded polymer lithium-ion batteries obtained in Embodiments 1-14 and Comparative Embodiments 1-3 was carried out by using a lithium-ion battery performance test cabinet (Guangzhou Lanqi, BK6016). The rate discharge test method is as follows: the battery was charged at 0.5 C (1 C=2520 mA) constant current and constant voltage to 4.35 V, cut off at 0.02 C, placed for 5 min, and discharged at 0.2 C/0.5 C/1 C/2 C/3 C/4 C to 3.0 V, and the discharge capacity was recorded. The results of the rate discharge test are listed in Table 2. The test results show that the high-rate discharge performance of the porous self-crosslinked GPE lithium-ion battery is greatly higher than that of the dense self-crosslinked GPE lithium-ion battery. This is because that the increase of the conductivity can reduce the polarization phenomenon in the charging-discharging process, which is beneficial to lithium ion migration.

(7) Test of room-temperature cycle performance:

A 25°C cycle performance test of the graded polymer lithium-ion batteries obtained in Embodiment 1 and Comparative Embodiment 2 was carried out by using a lithium-ion battery performance test cabinet (Guangzhou Lanqi, BK6016). The test method is as follows: the battery was charged at 1 C to 4.35 V, cut off at 0.1 C, placed for 10 min, and discharged at 1 C to 3.0 V, and the cycle was repeated. The cycle results are shown in FIG. 3. The test results show that the cycle performance of the porous self-crosslinked gel polymer electrolyte lithium-ion battery prepared by the present disclosure is much better than that of the battery using the dense self-crosslinked polymer electrolyte. Lithium ions migrate slowly in the dense self-crosslinked polymer electrolyte, so that the battery using the dense self-crosslinked polymer electrolyte has large polarization at the time of charging and discharging, and lithium dendrites are produced in the charging step of each cycle to consume lithium, resulting in faster capacity decay. However, the battery using the porous self-crosslinked gel polymer electrolyte does not have such a disadvantage, and thus the cycle performance is greatly improved.

(8) Test of high-temperature cycle performance:

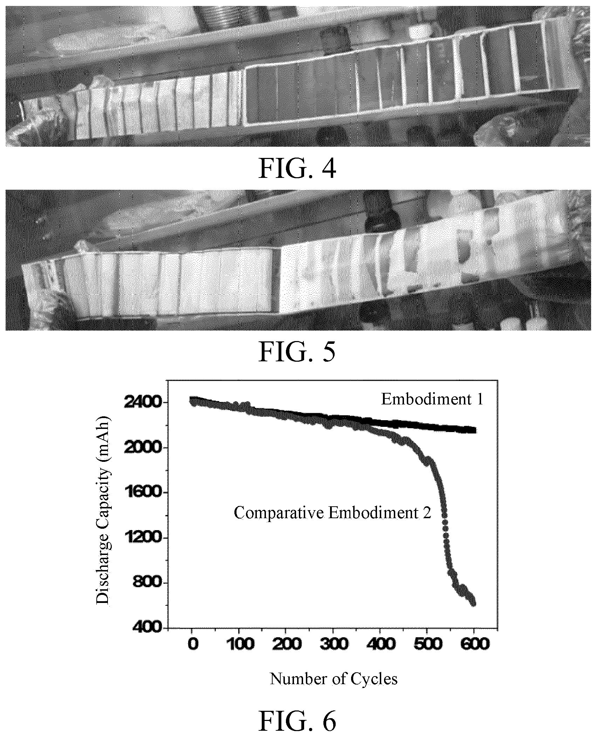

A 45°C cycle performance test of the graded polymer lithium-ion batteries obtained in Embodiment 1 and Comparative Embodiment 3 was carried out by using a lithium-ion battery performance test cabinet (Guangzhou Lanqi, BK6016). The test method is as follows: the battery was charged at 1 C to 4.35 V, cut off at 0.1 C, placed for 10 min, and discharged at 1 C to 3.0 V, and the cycle was repeated. The cycle results are shown in FIG. 4. The test results show that the high-temperature cycle performance of the porous self-crosslinked gel polymer electrolyte lithium-ion battery prepared by the present disclosure is better than that of the ceramic separator battery. Thus, the porous self-crosslinked polymer membrane provided by the present disclosure is beneficial to improving the high-temperature performance of the battery when being used in a battery.

(9) Test of high-temperature storage performance:

An 85°C 4-hour storage performance test was carried out on the lithium-ion batteries obtained in Embodiment 1 and Comparative Embodiment 3. The test method is as follows: 1. the battery was charged at 0.5 C to 4.35 V by using a lithium-ion battery performance test cabinet (Guangzhou Lanqi, BK6016), and cut off at 0.02 C; the battery was placed for 5 min, and discharged at 0.2 C to 3.0 V, and the pre-discharge capacity was recorded; 2. the battery was charged at 0.5 C to 4.35 V, and cut off at 0.02C; the battery was placed for 1 hour, and tested for the pre-voltage, internal resistance and thickness; 3. the battery was put in an 85°C oven and stored for 4 hours; 4. the thickness was tested immediately after the storage, and the battery was placed at room temperature for 2 hours, and tested for the cooled thickness, post-voltage and post-internal resistance; 5. the battery was discharged at 0.2 C to 3.0 V, the surplus capacity was recorded, and the capacity surplus ratio (surplus capacity divided by pre-discharge capacity) was calculated; and 6. the battery was fully charged at 0.5 C, placed for 5 min and discharged at 0.2 C to 3.0 V, the recovery capacity was recorded, and the capacity recovery rate (recovery capacity divided by pre-capacity) was calculated. The test results are shown in Table 3. As can be seen from Table 3, the porous gel polymer lithium-ion battery prepared by the present disclosure is much better than the ceramic separator battery in terms of capacity surplus ratio, capacity recovery rate, voltage change rate and thickness change rate after high-temperature storage. Thus, the porous self-crosslinked polymer membrane provided by the present disclosure is beneficial to improving the high-temperature performance of the battery when being used in a battery.

Table 1

| No. | Porosity (%) | Liquid Absorption Rate (%) | Conductivity (mS/cm) |
|---|---|---|---|
| Embodiment 1 | 62 | 263 | 8.33 |
| Embodiment 2 | 48 | 192 | 7.52 |
| Embodiment 3 | 51 | 300 | 7.14 |
| Embodiment 4 | 53 | 311 | 7.52 |
| Embodiment 5 | 46 | 220 | 7.39 |
| Embodiment 6 | 55 | 287 | 7.91 |
| Embodiment 7 | 59 | 252 | 8.12 |
| Embodiment 8* | 54 | 76 | 7.86 |
| Embodiment 9* | 47 | 112 | 7.40 |
| Embodiment 10 | 48 | 293 | 7.88 |
| Embodiment 11 | 50 | 214 | 7.31 |
| Embodiment 12 | 46 | 182 | 7.26 |
| Embodiment 13 | 54 | 315 | 7.53 |
| Embodiment 14 | 47 | 160 | 7.16 |
| Comparative Embodiment 1 | - | 156 | 5.25 |
| Comparative Embodiment 2 | - | 130 | 5.11 |
| Comparative Embodiment 3 | - | - | - |
| *Reference | | | |

Table 2

| No. | Discharge Capacity (mAh) | | | | | | Ratio of Discharge Capacity at Each Rate to 0.2 C (%) | | | | | |
|---|---|---|---|---|---|---|---|---|---|---|---|---|
| | 0.2 C | 0.5 C | 1C | 2C | 3C | 4C | 0.2 C | 0.5 C | 1C | 2C | 3C | 4C |
| Embodiment 1 | 2580 | 2568 | 2543 | 2495 | 2421 | 2357 | 100% | 100% | 99% | 97% | 94% | 91% |
| Embodiment 2 | 2549 | 2517 | 2487 | 2410 | 2323 | 2105 | 100% | 99% | 98% | 95% | 91% | 83% |
| Embodiment 3 | 2564 | 2539 | 2516 | 2449 | 2343 | 2185 | 100% | 99% | 98% | 96% | 91% | 85% |
| Embodiment 4 | 2555 | 2522 | 2490 | 2410 | 2269 | 2089 | 100% | 99% | 97% | 94% | 89% | 82% |
| Embodiment 5 | 2660 | 2631 | 2501 | 2351 | 2015 | 1669 | 100% | 99% | 94% | 88% | 76% | 63% |
| Embodiment 6 | 2541 | 2518 | 2493 | 2439 | 2338 | 2224 | 100% | 99% | 98% | 96% | 92% | 88% |
| Embodiment 7 | 2570 | 2545 | 2518 | 2458 | 2397 | 2284 | 100% | 99% | 98% | 96% | 93% | 89% |
| Embodiment 8* | 2612 | 2588 | 2557 | 2499 | 2392 | 2272 | 100% | 99% | 98% | 96% | 92% | 87% |
| Embodiment 9* | 2569 | 2529 | 2520 | 2411 | 2138 | 1855 | 100% | 98% | 98% | 94% | 83% | 72% |
| Embodiment 10 | 2571 | 2545 | 2520 | 2468 | 2391 | 2314 | 100% | 99% | 98% | 96% | 93% | 90% |
| Embodiment 11 | 2582 | 2505 | 2453 | 2324 | 2246 | 2066 | 100% | 97% | 95% | 90% | 87% | 80% |
| Embodiment 12 | 2569 | 2518 | 2466 | 2415 | 2286 | 2081 | 100% | 98% | 96% | 94% | 89% | 81% |
| Embodiment 13 | 2553 | 2519 | 2488 | 2406 | 2263 | 2086 | 100% | 99% | 97% | 94% | 89% | 82% |
| Embodiment 14 | 2562 | 2536 | 2514 | 2443 | 2341 | 2183 | 100% | 99% | 98% | 95% | 91% | 85% |
| Comparative Embodiment 1 | 2558 | 2387 | 2023 | 1544 | 1247 | 996 | 100% | 93% | 79% | 60% | 49% | 39% |
| Comparative Embodiment 2 | 2548 | 2381 | 2006 | 1504 | 1140 | 828 | 100% | 93% | 79% | 59% | 45% | 32% |
| Comparative Embodiment 3 | 2582 | 2570 | 2556 | 2505 | 2427 | 2375 | 100% | 100% | 99% | 97% | 94% | 92% |
| * Reference | | | | | | | | | | | | |

Table 3

| No. | Embodiment 1 | Comparative Embodiment 3 |
|---|---|---|
| Pre-voltage (V) | 4.346 | 4.342 |
| Pre-internal Resistance (m$\Omega$) | 25.4 | 27.1 |
| Pre-thickness (mm) | 4.47 | 4.82 |
| Pre-capacity (mAh) | 2575 | 2512 |
| Post-voltage (V) | 4.273 | 3.987 |
| Post-internal Resistance (m$\Omega$) | 29.9 | 35.4 |
| Immediate Thickness (mm) | 4.58 | 5.15 |
| Cooled Thickness (mm) | 4.52 | 5.09 |
| Surplus Capacity (mAh) | 2374 | 2135 |
| Recovery Capacity (mAh) | 2504 | 2261 |
| Immediate Thickness Change Rate | 2.5% | 6.8% |
| Cooled Thickness Change Rate | 1.1% | 5.6% |
| Capacity Surplus Ratio | 92.2% | 85.0% |
| Capacity Recovery Rate | 97.2% | 89.9% |
| Voltage Change Rate | 1.7% | 8.2% |

**Claims**

1. A battery separator, comprising a porous base membrane, and

   a bonding layer attached to at least one side surface of the porous base membrane,
   wherein the bonding layer contains an acrylate crosslinked polymer and a styrene-acrylate crosslinked copolymer but does not contain a vinylidene fluoride-hexafluoropropylene copolymer, the weight ratio of the acrylate crosslinked polymer to the styrene-acrylate crosslinked copolymer is 1:0.05 to 1:2 or

   the bonding layer contains an acrylate crosslinked polymer and a vinylidene fluoride-hexafluoropropylene copolymer but does not contain a styrene-acrylate crosslinked copolymer, the weight ratio of the acrylate crosslinked polymer to the vinylidene fluoride-hexafluoropropylene copolymer is 1:0.3 to 1:25 or

   the bonding layer contains an acrylate crosslinked polymer, a styrene-acrylate crosslinked copolymer and a vinylidene fluoride-hexafluoropropylene copolymer, the weight ratio of the acrylate crosslinked polymer to the styrene-acrylate crosslinked copolymer to the vinylidene fluoride-hexafluoropropylene copolymer is 1:(0.01 to 2):(0.3 to 5)
   the porosity of the bonding layer is 40-65%,
   wherein the acrylate crosslinked polymer is a mixture of a first acrylate crosslinked polymer and a second acrylate crosslinked polymer and/or a third acrylate crosslinked polymer, or is the second acrylate crosslinked polymer, or is the third acrylate crosslinked polymer, and
   wherein the first acrylate crosslinked polymer contains 70-80 wt% of polymethyl methacrylate segment, 2-10 wt% of polyethyl acrylate segment, 10-20 wt% of polybutyl acrylate segment and 2-10 wt% of polyacrylic acid segment, the second acrylate crosslinked polymer contains 30-40 wt% of polymethyl methacrylate segment, 2-10 wt% of polyethyl acrylate segment, 50-60 wt% of polybutyl acrylate segment and 2-10 wt% of polyacrylic acid segment, and the third acrylate crosslinked polymer contains 50-80 wt% of polymethyl methacrylate segment, 2-10 wt% of polyethyl acrylate segment, 15-40 wt% of polybutyl acrylate segment and 2-10 wt% of polyacrylic acid segment;

2. The battery separator according to claim 1, wherein the glass transition temperature of the acrylate crosslinked polymer is -20°C to 60°C, the glass transition temperature of the styrene-acrylate crosslinked copolymer is -30°C to 50°C, and the glass transition temperature of the vinylidene fluoride-hexafluoropropylene copolymer is -65°C to -40°C.

3. The battery separator according to claim 1, wherein
or
the glass transition temperature of the first acrylate crosslinked polymer is 50°C to 60°C, the glass transition temperature of the second acrylate crosslinked polymer is -20°C to -5°C, and the glass transition temperature of the third acrylate crosslinked polymer is 30°C to 50°C, or
the styrene-acrylate crosslinked copolymer contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment; and the glass transition temperature of the styrene-acrylate crosslinked copolymer is 15°C to 30°C, or
the vinylidene fluoride-hexafluoropropylene copolymer contains 80-98 wt% of polyvinylidene fluoride segment and 2-20 wt% of polyhexafluoropropylene segment; and the glass transition temperature of the vinylidene fluoride-hexafluoropropylene copolymer is -60°C to -40°C.

4. The battery separator according to claim 3, wherein
the bonding layer contains the first acrylate crosslinked polymer, the second acrylate crosslinked polymer and the styrene-acrylate crosslinked copolymer but does not contain the vinylidene fluoride-hexafluoropropylene copolymer, and the weight ratio of the first acrylate crosslinked polymer to the second acrylate crosslinked polymer to the styrene-acrylate crosslinked copolymer is (5 to 10):1:(10 to 13); or
the bonding layer contains the first acrylate crosslinked polymer, the second acrylate crosslinked polymer and the vinylidene fluoride-hexafluoropropylene copolymer but does not contain the styrene-acrylate crosslinked copolymer, and the weight ratio of the first acrylate crosslinked polymer to the second acrylate crosslinked polymer to the vinylidene fluoride-hexafluoropropylene copolymer is (5 to 15):1:(5 to 12); or
the bonding layer contains the second acrylate crosslinked polymer and the vinylidene fluoride-hexafluoropropylene copolymer but does not contain the styrene-acrylate crosslinked copolymer, and the weight ratio of the second acrylate crosslinked polymer to the vinylidene fluoride-hexafluoropropylene copolymer is 1:5 to 1:20; or
the bonding layer contains the second acrylate crosslinked polymer, the styrene-acrylate crosslinked copolymer and the vinylidene fluoride-hexafluoropropylene copolymer, and the weight ratio of the second acrylate crosslinked polymer to the styrene-acrylate crosslinked copolymer to the vinylidene fluoride-hexafluoropropylene copolymer is 1:(0.5 to 2):(1 to 5); or
the bonding layer contains the third acrylate crosslinked polymer, the styrene-acrylate crosslinked copolymer and the vinylidene fluoride-hexafluoropropylene copolymer, and the weight ratio of the third acrylate crosslinked polymer to the styrene-acrylate crosslinked copolymer to the vinylidene fluoride-hexafluoropropylene copolymer is 1 :(0.5 to 2):(1 to 5); or,
the bonding layer contains the first acrylate crosslinked polymer, the second acrylate crosslinked polymer, the styrene-acrylate crosslinked copolymer and the vinylidene fluoride-hexafluoropropylene copolymer, and the weight ratio of the first acrylate crosslinked polymer to the second acrylate crosslinked polymer to the styrene-acrylate crosslinked copolymer to the vinylidene fluoride-hexafluoropropylene copolymer is (10 to 15):1:(0.5 to 2):(5 to 10); the styrene-acrylate crosslinked copolymer contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment, and the vinylidene fluoride-hexafluoropropylene copolymer contains 80-98 wt% of polyvinylidene fluoride segment and 2-20 wt% of polyhexafluoropropylene segment; and the glass transition temperature of the first acrylate crosslinked polymer is 50°C to 60°C, the glass transition temperature of the second acrylate crosslinked polymer is -20°C to -5°C, the glass transition temperature of the third acrylate crosslinked polymer is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

5. The battery separator according to any of claims 1 to 3, wherein
the bonding layer further contains at least one of an acrylonitrile-acrylate copolymer, a chloroprene-acrylonitrile copolymer and a styrene-butadiene copolymer; or
optionally, when the bonding layer further contains the acrylonitrile-acrylate copolymer, the weight ratio of the acrylonitrile-acrylate copolymer to the acrylate crosslinked polymer is 0.05:1 to 2:1; or
optionally, when the bonding layer further contains the chloroprene-acrylonitrile copolymer, the weight ratio of the chloroprene-acrylonitrile copolymer to the acrylate crosslinked polymer is 0.15:1 to 7:1; or

optionally, when the bonding layer further contains the styrene-butadiene copolymer, the weight ratio of the styrene-butadiene copolymer to the acrylate crosslinked polymer is 0.05:1 to 2:1, or

the single-side surface density of the bonding layer is 0.05-0.9 mg/cm$^2$; and the single-side thickness of the bonding layer is 0.1-1 $\mu$m, or

the porous base membrane is a polymer base membrane or a ceramic base membrane, and the ceramic base membrane comprises a polymer base membrane and a ceramic layer located on at least one side surface of the polymer base membrane; and the total thickness of the porous base membrane is 9-22 $\mu$m.

6. A preparation method of a battery separator as defined in claim 1, the method comprising: attaching a slurry containing a self-crosslinked pure acrylic emulsion and a self-crosslinked styrene-acrylic emulsion and/or a vinylidene fluoride-hexafluoropropylene copolymer emulsion to at least one side surface of a porous base membrane, and then drying to form a bonding layer having a porosity of 40-65% on at least one side surface of the porous base membrane.

7. The method according to claim 6, wherein the glass transition temperature of the acrylate crosslinked polymer in the self-crosslinked pure acrylic emulsion is -20°C to 60°C, the glass transition temperature of the styrene-acrylate crosslinked copolymer in the self-crosslinked styrene-acrylic emulsion is -30°C to 50°C, and the glass transition temperature of the vinylidene fluoride-hexafluoropropylene copolymer in the vinylidene fluoride-hexafluoropropylene copolymer emulsion is -65°C to -40°C.

8. The method according to claim 6 or 7, wherein one or more of the following features are fulfilled:

the slurry contains the self-crosslinked pure acrylic emulsion and the self-crosslinked styrene-acrylic emulsion but does not contain the vinylidene fluoride-hexafluoropropylene copolymer emulsion, and the weight ratio of solid content of the self-crosslinked pure acrylic emulsion to the self-crosslinked styrene-acrylic emulsion is 1:0.05 to 1:2; or

the slurry contains the self-crosslinked pure acrylic emulsion and the vinylidene fluoride-hexafluoropropylene copolymer emulsion but does not contain the self-crosslinked styrene-acrylic emulsion, and the weight ratio of solid content of the self-crosslinked pure acrylic emulsion to the vinylidene fluoride-hexafluoropropylene copolymer emulsion is 1:0.3 to 1:25; or

the slurry contains the self-crosslinked pure acrylic emulsion, the self-crosslinked styrene-acrylic emulsion and the vinylidene fluoride-hexafluoropropylene copolymer emulsion, and the weight ratio of solid content of the self-crosslinked pure acrylic emulsion to the self-crosslinked styrene-acrylic emulsion to the vinylidene fluoride-hexafluoropropylene copolymer emulsion is 1:(0.01 to 2):(0.3 to 5), or

the self-crosslinked pure acrylic emulsion is a mixture of a first self-crosslinked pure acrylic emulsion and a second self-crosslinked pure acrylic emulsion and/or a third self-crosslinked pure acrylic emulsion, or the second self-crosslinked pure acrylic emulsion, or the third self-crosslinked pure acrylic emulsion;

the acrylate crosslinked polymer in the first self-crosslinked pure acrylic emulsion contains 70-80 wt% of polymethyl methacrylate segment, 2-10 wt% of polyethyl acrylate segment, 10-20 wt% of polybutyl acrylate segment and 2-10 wt% of polyacrylic acid segment, the acrylate crosslinked polymer in the second self-crosslinked pure acrylic emulsion contains 30-40 wt% of polymethyl methacrylate segment, 2-10 wt% of polyethyl acrylate segment, 50-60 wt% of polybutyl acrylate segment and 2-10 wt% of polyacrylic acid segment, and the acrylate crosslinked polymer in the third self-crosslinked pure acrylic emulsion contains 50-80 wt% of polymethyl methacrylate segment, 2-10 wt% of polyethyl acrylate segment, 15-40 wt% of polybutyl acrylate segment and 2-10 wt% of polyacrylic acid segment; and

the glass transition temperature of the acrylate crosslinked polymer in the first self-crosslinked pure acrylic emulsion is 50°C to 60°C, the glass transition temperature of the acrylate crosslinked polymer in the second self-crosslinked pure acrylic emulsion is -20°C to -5°C, and the glass transition temperature of the acrylate crosslinked polymer in the third self-crosslinked pure acrylic emulsion is 30°C to 50°C, or

the styrene-acrylate crosslinked copolymer in the self-crosslinked styrene-acrylic emulsion contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment; and the glass transition temperature of the styrene-acrylate crosslinked copolymer is 15°C to 30°C, or

the vinylidene fluoride-hexafluoropropylene copolymer in the vinylidene fluoride-hexafluoropropylene copolymer emulsion contains 80-98 wt% of polyvinylidene fluoride segment and 2-20 wt% of polyhexafluoropropylene segment; and the glass transition temperature of the vinylidene fluoride-hexafluoropropylene copolymer is -60°C to -40°C.

9. The method according to any of claims 6 to 8, wherein

the slurry contains the first self-crosslinked pure acrylic emulsion, the second self-crosslinked pure acrylic emulsion and the self-crosslinked styrene-acrylic emulsion but does not contain the vinylidene fluoride-hexafluoropropylene copolymer emulsion, and the weight ratio of solid content of the first self-crosslinked pure acrylic emulsion to the second self-crosslinked pure acrylic emulsion to the self-crosslinked styrene-acrylic emulsion is (5 to 10):1:(10 to 13); or

the slurry contains the first self-crosslinked pure acrylic emulsion, the second self-crosslinked pure acrylic emulsion and the vinylidene fluoride-hexafluoropropylene copolymer emulsion but does not contain the self-crosslinked styrene-acrylic emulsion, and the weight ratio of solid content of the first self-crosslinked pure acrylic emulsion to the second self-crosslinked pure acrylic emulsion to the vinylidene fluoride-hexafluoropropylene copolymer emulsion is (5 to 15):1:(5 to 12); or

the slurry contains the second self-crosslinked pure acrylic emulsion and the vinylidene fluoride-hexafluoropropylene copolymer emulsion but does not contain the self-crosslinked styrene-acrylic emulsion, and the weight ratio of solid content of the second self-crosslinked pure acrylic emulsion to the vinylidene fluoride-hexafluoropropylene copolymer emulsion is 1:5 to 1:20; or

the slurry contains the second self-crosslinked pure acrylic emulsion, the self-crosslinked styrene-acrylic emulsion and the vinylidene fluoride-hexafluoropropylene copolymer emulsion, and the weight ratio of solid content of the second self-crosslinked pure acrylic emulsion to the self-crosslinked styrene-acrylic emulsion to the vinylidene fluoride-hexafluoropropylene copolymer emulsion is 1:(0.5 to 2):(1 to 5); or

the slurry contains the third self-crosslinked pure acrylic emulsion, the self-crosslinked styrene-acrylic emulsion and the vinylidene fluoride-hexafluoropropylene copolymer emulsion, and the weight ratio of solid content of the third self-crosslinked pure acrylic emulsion to the self-crosslinked styrene-acrylic emulsion to the vinylidene fluoride-hexafluoropropylene copolymer emulsion is 1:(0.5 to 2):(1 to 5); or

the slurry contains the first self-crosslinked pure acrylic emulsion, the second self-crosslinked pure acrylic emulsion, the self-crosslinked styrene-acrylic emulsion and the vinylidene fluoride-hexafluoropropylene copolymer emulsion, and the weight ratio of solid content of the first self-crosslinked pure acrylic emulsion to the second self-crosslinked pure acrylic emulsion to the self-crosslinked styrene-acrylic emulsion to the vinylidene fluoride-hexafluoropropylene copolymer emulsion is (10 to 15):1:(0.5 to 2):(5 to 10);

the acrylate crosslinked polymer in the first self-crosslinked pure acrylic emulsion contains 70-80 wt% of polymethyl methacrylate segment, 2-10 wt% of polyethyl acrylate segment, 10-20 wt% of polybutyl acrylate segment and 2-10 wt% of polyacrylic acid segment, the acrylate crosslinked polymer in the second self-crosslinked pure acrylic emulsion contains 30-40 wt% of polymethyl methacrylate segment, 2-10 wt% of polyethyl acrylate segment, 50-60 wt% of polybutyl acrylate segment and 2-10 wt% of polyacrylic acid segment, the acrylate crosslinked polymer in the third self-crosslinked pure acrylic emulsion contains 50-80 wt% of polymethyl methacrylate segment, 2-10 wt% of polyethyl acrylate segment, 15-40 wt% of polybutyl acrylate segment and 2-10 wt% of polyacrylic acid segment, the styrene-acrylate crosslinked copolymer in the self-crosslinked styrene-acrylic emulsion contains 40-50 wt% of polystyrene segment, 5-15 wt% of polymethyl methacrylate segment, 2-10 wt% of polyethyl acrylate segment, 30-40 wt% of polybutyl acrylate segment and 2-10 wt% of polyacrylic acid segment, and the vinylidene fluoride-hexafluoropropylene copolymer in the vinylidene fluoride-hexafluoropropylene copolymer emulsion contains 80-98 wt% of polyvinylidene fluoride segment and 2-20 wt% of polyhexafluoropropylene segment; and the glass transition temperature of the acrylate crosslinked polymer in the first self-crosslinked pure acrylic emulsion is 50°C to 60°C, the glass transition temperature of the acrylate crosslinked polymer in the second self-crosslinked pure acrylic emulsion is -20°C to -5°C, the glass transition temperature of the acrylate crosslinked polymer in the third self-crosslinked pure acrylic emulsion is 30°C to 50°C, the glass transition temperature of the styrene-acrylate crosslinked copolymer is 15°C to 30°C, and the glass transition temperature of the vinylidene fluoride-hexafluoropropylene copolymer is -60°C to -40°C.

10. The method according to any of claims 6 to 9, wherein the slurry further contains at least one of an acrylonitrile-acrylate copolymer emulsion, an chloroprene-acrylonitrile emulsion and a styrene-butadiene latex;
optionally, when the slurry further contains the acrylonitrile-acrylate copolymer emulsion, the weight ratio of solid content of the acrylonitrile-acrylate copolymer emulsion to the self-crosslinked pure acrylic emulsion is 0.05:1 to 2:1;
optionally, when the slurry further contains the chloroprene-acrylonitrile emulsion, the weight ratio of solid content of the chloroprene-acrylonitrile emulsion to the self-crosslinked pure acrylic emulsion is 0.15:1 to 7:1; and
optionally, when the slurry further contains the styrene-butadiene latex, the weight ratio of solid content of the styrene-butadiene latex to the self-crosslinked pure acrylic emulsion is 0.05:1 to 2:1.

11. The method according to any of claims 6 to 10, wherein an attaching method is a spraying method and/or a screen printing method; the operating temperatures of the spraying method and the screen printing method are each independently 30°C to 80°C; and the drying temperature is 30°C to 80°C.

**12.** A lithium-ion battery, comprising a positive electrode plate, a negative electrode plate, an electrolyte and a battery separator, wherein the battery separator is the battery separator according to any of claims 1 to 5.

**13.** A preparation method of a lithium-ion battery, comprising: sequentially laminating or winding a positive electrode plate, a battery separator and a negative electrode plate into a pole core, then injecting an electrolyte into the pole core and sealing, wherein the battery separator is the battery separator according to any of claims 1 to 5.


**Patentansprüche**

**1.** Batterieseparator, enthaltend eine poröse Basismembran und
eine Bindeschicht, die an zumindest eine Seitenoberfläche der porösen Basismembran gebunden ist,
worin die Bindeschicht ein Acrylat-vernetztes Polymer und ein Styrol-Acrylat-vernetztes Copolymer, aber kein Vinylidenfluorid-Hexafluorpropylen-Copolymer enthält, wobei das Gewichtsverhältnis des Acrylat-vernetzten Polymers zum Styrol-Acrylat-vernetzen Copolymer 1:0,05 bis 1:2 ist, oder
die Bindeschicht ein Acrylat-vernetztes Polymer und ein Vinylidenfluorid-Hexafluorpropylen-Copolymer, aber kein Styrol-Acrylat-vernetztes Copolymer enthält, wobei das Gewichtsverhältnis des Acrylat-vernetzten Polymers zum Vinylidenfluorid-Hexafluorpropylen-Copolymer 1:0,3 bis 1:25 ist, oder
die Bindeschicht ein Acrylat-vernetztes Polymer, ein Styrol-Acrylat-vernetztes Copolymer und ein Vinylidenfluorid-Hexafluorpropylen-Copolymer enthält, wobei das Gewichtsverhältnis des Acrylat-vernetzten Polymers zum Styrol-Acrylat-vernetzten Copolymer zum Vinylidenfluorid-Hexafluorpropylen-Copolymer 1:(0,01 bis 2) : (0,3 bis 5) ist,
die Porosität der Bindeschicht 40-65 % ist,
worin das Acrylat-vernetzte Polymer eine Mischung aus einem ersten Acrylat-vernetzten Polymer und einem zweiten Acrylat-vernetzten Polymer und/oder einem dritten Acrylat-vernetzten Polymer oder das zweite Acrylat-vernetzte Polymer oder das dritte Acrylat-vernetzte Polymer ist und
worin das erste Acrylat-vernetzte Polymer 70-80 Gew.-% Polymethylmethacrylatsegment, 2-10 Gew.-% Polyethylacrylatsegment, 10-20 Gew.-% Polybutylacrylatsegment und 2-10 Gew.-% Polyacrylsäuresegment enthält, das zweite Acrylat-vernetzte Polymer 30-40 Gew.-% Polymethylmethacrylatsegment, 2-10 Gew.-% Polyethylacrylatsegment, 50-60 Gew.-% Polybutylacrylatsegment und 2-10 Gew.-% Polyacrylsäuresegment enthält und das dritte Acrylat-vernetzte Polymer 50-80 Gew.-% Polymethylmethacrylatsegment, 2-10 Gew.-% Polyethylacrylatsegment, 15-40 Gew.-% Polybutylacrylatsegment und 2-10 Gew.-% Polyacrylsäuresegment enthält.

**2.** Batterieseparator gemäß Anspruch 1, worin die Glasübergangstemperatur des Acrylat-vernetzen Polymers -20 bis 60°C, die Glasübergangstemperatur des Styrol-Acrylat-vernetzten Copolymer -30 bis 50°C und die Glasübergangstemperatur des Vinylidenfluorid-Hexafluorpropylen-Copolymers -65 bis -40°C ist.

**3.** Batterieseparator gemäß Anspruch 1, worin die Glasübergangstemperatur des ersten Acrylat-vernetzen Polymers 50 bis 60°C, die Glasübergangstemperatur des zweiten Acrylat-vernetzten Polymers -20 bis -5°C und die Glasübergangstemperatur des dritten Acrylat-vernetzten Polymers 30 bis 50°C ist, oder
das Styrol-Acrylat-vernetzte Copolymer 40-50 Gew.-% Polystyrolsegment, 5-15 Gew.-% Polymethylmethacrylatsegment, 2-10 Gew.-% Polyethylacrylatsegment, 30-40 Gew.-% Polybutylacrylatsegment und 2-10 Gew.-% Polyacrylsäuresegment enthält und die Glasübergangstemperatur des Styrol-Acrylat-vernetzten Copolymers 15 bis 30°C ist oder
das Vinylidenfluorid-Hexafluorpropylen-Copolymer 80-98 Gew.-% Polyvinylidenfluoridsegment und 2-20 Gew.-% Polyhexafluorpropylensegment enthält und die Glasübergangstemperatur des Vinylidenfluorid-Hexafluorpropylen-Copolymers -60 bis -40°C ist.

**4.** Batterieseparator gemäß Anspruch 3, worin
die Bindeschicht das erste Acrylat-vernetzte Polymer, das zweite Acrylat-vernetzte Polymer und das Styrol-Acrylat-vernetzte Copolymer, aber nicht das Vinylidenfluorid-Hexafluorpropylen-Copolymer enthält und das Gewichtsverhältnis des ersten Acrylat-vernetzten Polymers zum zweiten Acrylat-vernetzten Polymer zum Styrol-Acrylat-vernetzten Copolymer (5 bis 10) : 1 : (10 bis 13) ist, oder
die Bindeschicht das erste Acrylat-vernetzte Polymer, das zweite Acrylat-vernetzte Polymer und das Vinylidenfluorid-Hexafluorpropylen-Copolymer, aber nicht das Styrol-Acrylat-vernetzte Copolymer enthält und das Gewichtsverhältnis des ersten Acrylat-vernetzten Polymers zum zweiten Acrylat-vernetzten Polymer zum Vinylidenfluorid-Hexafluorpropylen-Copolymer (5 bis 15) :1: (5 bis 12) ist, oder
die Bindeschicht das zweite Acrylat-vernetzte Polymer und das Vinylidenfluorid-Hexafluorpropylen-Copolymer, aber nicht das Styrol-Acrylat-vernetzte Copolymer enthält und das Gewichtsverhältnis des zweiten Acrylat-vernetzten Polymers zum Vinylidenfluorid-Hexafluorpropylen-Copolymer 1:5 bis 1:20 ist, oder

die Bindeschicht das zweite Acrylat-vernetzte Polymer, das Styrol-Acrylat-vernetzte Copolymer und das Vinylidenfluorid-Hexafluorpropylen-Copolymer enthält und das Gewichtsverhältnis des zweiten Acrylat-vernetzten Polymers zum Styrol-Acrylat-vernetzten Copolymer zum Vinylidenfluorid-Hexafluorpropylen-Copolymer 1: (0,5 bis 2) : (1 bis 5) ist, oder

die Bindeschicht das dritte Acrylat-vernetzte Polymer, das Styrol-Acrylat-vernetzte Copolymer und das Vinylidenfluorid-Hexafluorpropylen-Copolymer enthält und das Gewichtsverhältnis des dritten Acrylat-vernetzten Polymers zum Styrol-Acrylat-vernetzten Copolymer zum Vinylidenfluorid-Hexafluorpropylen-Copolymer 1: (0,5 bis 2) : (1 bis 5) ist, oder

die Bindeschicht das erste Acrylat-vernetzte Polymer, das zweite Acrylat-vernetzte Polymer, das Styrol-Acrylat-vernetzte Copolymer und das Vinylidenfluorid-Hexafluorpropylen-Copolymer enthält und das Gewichtsverhältnis des ersten Acrylat-vernetzen Polymers zum zweiten Acrylat-vernetzten Polymer zum Styrol-Acrylat-vernetzten Copolymer zum Vinylidenfluorid-Hexafluorpropylen-Copolymer (10 bis 15) : 1 : (0,5 bis 2) : (5 bis 10) ist, das Styrol-Acrylat-vernetzte Copolymer 40-50 Gew.-% Polystyrolsegment, 5-15 Gew.-% Polymethylmethacrylatsegment, 2-10 Gew.-% Polyethylacrylatsegment, 30-40 Gew.-% Polybutylacrylatsegment und 2-10 Gew.-% Polyacrylsäuresegment enthält und das Vinylidenfluorid-Hexafluorpropylen-Copolymer 80-98 Gew.-% Polyvinylidenfluoridsegment und 2-20 Gew.-% Polyhexafluorpropylensegment enthält und die Glasübergangstemperatur des ersten Acrylat-vernetzten Polymers 50 bis 60°C, die Glasübergangstemperatur des zweiten Acrylat-vernetzten Polymers -20 bis -5°C, die Glasübergangstemperatur des dritten Acrylat-vernetzten Polymers 30 bis 50°C, die Glasübergangstemperatur des Styrol-Acrylat-vernetzten Copolymers 15 bis 30°C und die Glasübergangstemperatur des Vinylidenfluorid-Hexafluorpropylen-Copolymers -60 bis -40°C ist.

5. Batterieseparator gemäß einem der Ansprüche 1 bis 3, worin die Bindeschicht weiterhin zumindest ein Acrylnitril-Acrylat-Copolymer, Chloropren-Acrylnitril-Copolymer und Styrol-Butadien-Copolymer enthält oder

wahlweise, wenn die Bindeschicht weiterhin das Acrylnitril-Acrylat-Copolymer enthält, das Gewichtsverhältnis des Acrylnitril-Acrylat-Copolymers zum Acrylat-vernetzten Polymer 0,05:1 bis 2:1 ist oder

wahlweise, wenn die Bindeschicht weiterhin das Chloropren-Acrylnitril-Copolymer enthält, das Gewichtsverhältnis des Chloropren-Acrylnitril-Copolymers zum Acrylat-vernetzten Copolymer 0,15:1 bis 7:1 ist oder

wahlweise, wenn die Bindeschicht weiterhin das Styrol-Butadien-Copolymer enthält, das Gewichtsverhältnis des Styrol-Butadien-Copolymers zum Acrylat-vernetzten Polymer 0,05:1 bis 2:1 ist, oder

die einseitige Oberflächendichte der Bindeschicht 0,05-0,9 mg/cm$^2$ und die einseitige Dicke der Bindeschicht 0,1-1 μm ist oder

die poröse Basismembran eine Polymerbasismembran oder eine Keramikbasismembran ist und die Keramikbasismembran eine Polymerbasismembran und eine Keramikschicht enthält, die auf zumindest einer Seitenoberfläche der Polymerbasismembran angeordnet ist, und die Gesamtdicke der porösen Basismembran 9-22 μm ist.

6. Herstellverfahren eines Batterieseparators wie in Anspruch 1 definiert, wobei das Verfahren enthält: Auftragen einer Aufschlämmung, enthaltend eine selbstvernetzte reine Acrylemulsion und eine selbstvernetzte Styrol-Acryl-Emulsion und/oder eine Vinylidenfluorid-Hexafluorpropylen-Copolymeremulsion, auf zumindest einer Seitenoberfläche einer porösen Basismembran und anschließendes Trocknen, zur Bildung einer Bindeschicht mit einer Porosität von 40 bis 65 % auf zumindest einer Seitenoberfläche der porösen Basismembran.

7. Verfahren gemäß Anspruch 6, worin die Glasübergangstemperatur des Acrylat-vernetzten Polymers in der selbstvernetzten reinen Acrylemulsion -20 bis -60°C, die Glasübergangstemperatur des Styrol-Acrylat-vernetzten Copolymers in der selbstvernetzten Styrol-Acrylemulsion -30 bis 50°C und die Glasübergangstemperatur des Vinylidenfluorid-Hexafluorpropylen-Copolymers in der Vinylidenfluorid-Hexafluorpropylen-Copolymeremulsion -65 bis -40°C ist.

8. Verfahren gemäß Anspruch 6 oder 7, worin eines oder mehrere der folgenden Merkmale erfüllt sind:

die Aufschlämmung enthält die selbstvernetzte reine Acrylemulsion und die selbstvernetzte Styrol-Acrylemulsion, aber nicht die Vinylidenfluorid-Hexafluorpropylen-Copolymeremulsion und das Gewichtsverhältnis des Feststoffgehaltes der selbstvernetzten reinen Acrylemulsion zu der selbstvernetzten Styrol-Acrylemulsion ist 1:0,05 bis 1:2 oder

die Aufschlämmung enthält die selbstvernetzte reine Acrylemulsion und die Vinylidenfluorid-Hexafluorpropylen-Copolymeremulsion, aber nicht die selbstvernetzte Styrol-Acrylemulsion und das Gewichtsverhältnis des Feststoffgehaltes der selbstvernetzten reinen Acrylemulsion zu der selbstvernetzten Vinylidenfluorid-Hexafluorpropylen-Copolymeremulsion ist 1:0,3 bis 1:25 oder

die Aufschlämmung enthält die selbstvernetzte reine Acrylemulsion, die selbstvernetzte Styrol-Acrylemulsion und die Vinylidenfluorid-Hexafluorpropylen-Copolymeremulsion und das Gewichtsverhältnis des Feststoffgehaltes der selbstvernetzten reinen Acrylemulsion zu der selbstvernetzten Styrol-Acrylemulsion zu der selbstvernetzten Vinylidenfluorid-Hexafluorpropylen-Copolymeremulsion ist 1: (0,01 bis 2) : (0,3 bis 5) oder

die selbstvernetzte reine Acrylemulsion ist eine Mischung aus einer ersten selbstvernetzten reinen Acrylemulsion und einer zweiten selbstvernetzten reinen Acrylemulsion und/oder einer dritten selbstvernetzten reinen Acrylemulsion oder der zweiten selbstvernetzten reinen Acrylemulsion oder der dritten selbstvernetzten reinen Acrylemulsion,

das Acrylat-vernetzte Polymer in der ersten selbstvernetzten reinen Acrylemulsion enthält 70-80 Gew.-% Polymethylmethacrylatsegment, 2-10 Gew.-% Polyethylacrylatsegment, 10-20 Gew.-% Polybutylacrylatsegment und 2-10 Gew.-% Polyacrylsäuresegment, das zweite Acrylat-vernetzte Polymer in der zweiten selbstvernetzten reinen Acrylemulsion enthält 30-40 Gew.-% Polymethylmethacrylatsegment, 2-10 Gew.-% Polyethylacrylatsegment, 50-60 Gew.-% Polybutylacrylatsegment und 2-10 Gew.-% Polyacrylsäuresegment und das Acrylat-vernetzte Polymer in der dritten selbstvernetzten reinen Acrylemulsion enthält 50-80 Gew.-% Polymethylmethacrylatsegment, 2-10 Gew.-% Polyethylacrylatsegment, 15-40 Gew.-% Polybutylacrylatsegment und 2-10 Gew.-% Polyacrylsäuresegment und

die Glasübergangstemperatur des Acrylat-vernetzten Polymers in der ersten selbstvernetzten reinen Acrylemulsion ist 50 bis 60°C, Glasübergangstemperatur des Acrylat-vernetzten Polymers in der zweiten selbstvernetzten reinen Acrylemulsion ist -20 bis -5°C und Glasübergangstemperatur des Acrylat-vernetzten Polymers in der dritten selbstvernetzten reinen Acrylemulsion ist 30 bis 50°C oder

das Styrol-Acrylat-vernetzte Copolymer in der selbstvernetzten Styrol-Acrylemulsion enthält 40-50 Gew.-% Polystyrolsegment, 5-15 Gew.-% Polymethylmethacrylatsegment, 2-10 Gew.-% Polyethylacrylatsegment, 30-40 Gew.-% Polybutylacrylatsegment und 2-10 Gew.-% Polyacrylsäuresegment und die Glasübergangstemperatur des Styrol-Acrylat-vernetzten Copolymers ist 15 bis 30°C, oder

das Vinylidenfluorid-Hexafluorpropylen-Copolymer in der Vinylidenfluorid-Hexafluopropylen-Copolymer enthält 80-98 Gew.-% Polyvinylidenfluoridsegment und 2-20 Gew.-% Polyhexafluorpropylensegment und die Glasübergangstemperatur des Vinylidenfluorid-Hexafluorpropylen-Copolymers ist -60 bis -40°C.

9. Verfahren gemäß einem der Ansprüche 6 bis 8, worin

die Aufschlämmung die erste selbstvernetzte reine Acrylemulsion, die zweite selbstvernetzte reine Acrylemulsion und die selbstvernetzte reine Styrol-Acrylemulsion, aber nicht die Vinylidenfluorid-Hexafluorpropylen-Copolymeremulsion enthält und das Gewichtsverhältnis des Feststoffgehaltes der ersten selbstvernetzten reinen Acrylemulsion zu der zweiten selbstvernetzten reinen Acrylemulsion zu der selbstvernetzten Styrol-Acrylemulsion (5 bis 10) : 1 : (10 bis 13) ist, oder

die Aufschlämmung die erste selbstvernetzte reine Acrylemulsion, die zweite selbstvernetzte reine Acrylemulsion und die Vinylidenfluorid-Hexafluorpropylen-Copolymeremulsion, aber nicht die selbstvernetzte Styrol-Acrylemulsion enthält und das Gewichtsverhältnis des Feststoffgehaltes der ersten selbstvernetzten reinen Acrylemulsion zu der zweiten selbstvernetzten reinen Acrylemulsion zu der Vinylidenfluorid-Hexafluorpropylen-Copolymeremulsion (5 bis 15) : 1 : (5 bis 12) ist, oder

die Aufschlämmung die zweite selbstvernetzte reine Acrylemulsion, die Vinylidenfluorid-Hexafluorpropylen-Copolymeremulsion, aber nicht die selbstvernetzte Styrol-Acrylemulsion enthält und das Gewichtsverhältnis des Feststoffgehaltes der zweiten selbstvernetzten reinen Acrylemulsion zu der Vinylidenfluorid-Hexafluorpropylen-Copolymeremulsion 1:5 bis 1:20 ist, oder

die Aufschlämmung die zweite selbstvernetzte reine Acrylemulsion, die selbstvernetzte Styrol-Acrylemulsion und die Vinylidenfluorid-Hexafluorpropylen-Copolymeremulsion enthält und das Gewichtsverhältnis des Feststoffgehaltes der zweiten selbstvernetzten reinen Acrylemulsion zu der selbstvernetzten Styrol-Acrylemulsion zu der Vinylidenfluorid-Hexafluorpropylen-Copolymeremulsion 1: (0,5 bis 2) : (1 bis 5) ist, oder

die Aufschlämmung die dritte selbstvernetzte reine Acrylemulsion, die selbstvernetzte Styrol-Acrylemulsion und die Vinylidenfluorid-Hexafluorpropylen-Copolymeremulsion enthält und das Gewichtsverhältnis des Feststoffgehaltes der dritten selbstvernetzten reinen Acrylemulsion zu der selbstvernetzten Styrol-Acrylemulsion zu der Vinylidenfluorid-Hexafluorpropylen-Copolymeremulsion 1: (0,5 bis 2) : (1 bis 5) ist, oder

die Aufschlämmung die erste selbstvernetzte reine Acrylemulsion, die zweite selbstvernetzte reine Acrylemulsion, die selbstvernetzte Styrol-Acrylemulsion und die Vinylidenfluorid-Hexafluorpropylen-Copolymeremulsion enthält und das Gewichtsverhältnis des Feststoffgehaltes der ersten selbstvernetzten reinen Acrylemulsion zu der zweiten selbstvernetzten reinen Acrylemulsion zu der selbstvernetzten Styrol-Acrylemulsion zu der Vinylidenfluorid-Hexafluorpropylen-Copolymeremulsion (10 bis 15):1:(0,5 bis 2) : (5 bis 10) ist,

das Acrylat-vernetzte polymer in der ersten selbstvernetzten reinen Acrylemulsion 70-80 Gew.-% Polymethylmethacrylatsegment, 2-10 Gew.-% Polyethylacrylatsegment, 10-20 Gew.-% Polybutylacrylatsegment und 2-10 Gew.-

% Polyacrylsäuresegment enthält, das Acrylat-vernetzte Polymer in der zweiten selbstvernetzten reinen Acrylemulsion 30-40 Gew.-% Polymethylmethacrylatsegment, 2-10 Gew.-% Polyethylacrylatsegment, 50-60 Gew.-% Polybutylacrylatsegment und 2-10 Gew.-% Polyacrylsäuresegment enthält, das Acrylat-vernetzte Polymer in der dritten selbstvernetzten reinen Acrylemulsion 50-80 Gew.-% Polymethylmethacrylatsegment, 2-10 Gew.-% Polyethylacrylatsegment, 15-40 Gew.-% Polybutylacrylatsegment und 2-10 Gew.-% Polyacrylsäuresegment enthält, das Styrol-Acrylat-vernetzte Copolymer in der selbstvernetzten Styrol-Acrylemulsion 40-50 Gew.-% Polystyrolsegment, 5-15 Gew.-% Polymethylmethacrylatsegment, 2-10 Gew.-% Polyethylacrylatsegment, 30-40 Gew.-% Polybutylacrylatsegment und 2-10 Gew.-% Polyacrylsäuresegment enthält und das Vinylidenfluorid-Hexafluorpropylen-Copolymer in der Vinylidenfluorid-Hexafluorpropylen-Copolymeremulsion 80-98 Gew.-% Polyvinylidenfluoridsegment und 2-20 Gew.-% Polyhexafluorpropylensegment enthält und die Glasübergangstemperatur des Acrylat-vernetzten Polymers in der ersten selbstvernetzten reinen Acrylemulsion 50 bis 60°C, die Glasübergangstemperatur des Acrylat-vernetzten Polymers in der zweiten selbstvernetzten reinen Acrylemulsion -20 bis -5°C, die Glasübergangstemperatur des Acrylat-vernetzten Polymers in der dritten selbstvernetzten reinen Acrylemulsion 30 bis 50°C, die Glasübergangstemperatur des Styrol-Acrylat-vernetzten Copolymers 15 bis 30°C und die Glasübergangstemperatur des Vinylidenfluorid-Hexafluorpropylen-Copolymers -60 bis -40°C ist.

10. Verfahren gemäß einem der Ansprüche 6 bis 9, worin die Aufschlämmung weiterhin zumindest eines von einer Acrylnitril-Acrylat-Copolymeremulsion, Chloropren-Acrylnitrilemulsion und Styrol-Butadienlatex enthält,
wahlweise, wenn die Aufschlämmung weiterhin die Acrylnitril-Acrylat-Copolymeremulsion enthält, das Gewichtsverhältnis des Feststoffgehaltes der Acrylnitril-Acrylat-Copolymeremulsion zu der selbstvernetzten reinen Acrylemulsion 0,05:1 bis 2:1 ist oder
wahlweise, wenn die Aufschlämmung weiterhin die Chloropren-Acrylnitrilemulsion enthält, das Gewichtsverhältnis des Feststoffgehaltes der Chloropren-Acrylnitrilemulsion zu der selbstvernetzten reinen Acrylemulsion 0,15:1 bis 7:1 ist oder
wahlweise, wenn die Aufschlämmung weiterhin den Styrol-Butadienlatex enthält, das Gewichtsverhältnis des Feststoffgehaltes des Styrol-Butadienlatex zu der selbstvernetzten reinen Acrylemulsion 0,05:1 bis 2:1 ist.

11. Verfahren gemäß einem der Ansprüche 6 bis 10, worin ein Anhaftungsverfahren ein Sprühverfahren und/oder ein Siebdruckverfahren ist, die Arbeitstemperaturen des Sprühverfahrens und des Siebdruckverfahrens jeweils unabhängig 30 bis 80°C sind und die Trocknungstemperatur 30 bis 80°C sind.

12. Lithiumionenbatterie, enthaltend eine positive Elektrodenplatte, eine negative Elektrodenplatte, einen Elektrolyten und einen Batterieseparator, worin der Batterieseparator der Batterieseparator gemäß einem der Ansprüche 1 bis 5 ist.

13. Herstellverfahren einer Lithiumionenbatterie, enthaltend: aufeinanderfolgendes Laminieren oder Wickeln einer positiven Elektrodenplatte, eines Batterieseparators und einer negativen Elektrodenplatte zu einem Polkern, anschließendes Injizieren eines Elektrolyten in den Polkern und Abdichten, worin der Batterieseparator der Batterieseparator gemäß einem der Ansprüche 1 bis 5 ist.

## Revendications

1. Séparateur de batterie, comprenant une membrane de base poreuse, et
une couche de liaison fixée à au moins une surface latérale de la membrane de base poreuse,
dans lequel la couche de liaison contient un polymère réticulé d'acrylate et un copolymère réticulé de styrène-acrylate mais ne contient pas un copolymère de fluorure de vinylidène-hexafluoropropylène, le rapport en poids du polymère réticulé d'acrylate sur le copolymère réticulé de styrène-acrylate est de 1:0,05 à 1:2 ou
la couche de liaison contient un polymère réticulé d'acrylate et un copolymère de fluorure de vinylidène-hexafluoropropylène mais ne contient pas un copolymère réticulé de styrène-acrylate, le rapport en poids du polymère réticulé d'acrylate sur le copolymère de fluorure de vinylidène-hexafluoropropylène est de 1:0,3 à 1:25 ou
la couche de liaison contient un polymère réticulé d'acrylate, un copolymère réticulé de styrène-acrylate et un copolymère de fluorure de vinylidène-hexafluoropropylène, le rapport en poids du polymère réticulé d'acrylate sur le copolymère réticulé de styrène-acrylate sur le copolymère de fluorure de vinylidène-hexafluoropropylène est de 1:(0,01 à 2):(0,3 à 5),
la porosité de la couche de liaison est de 40-65 %,
dans lequel le polymère réticulé d'acrylate est un mélange d'un premier polymère réticulé d'acrylate et d'un deuxième polymère réticulé d'acrylate et/ou d'un troisième polymère réticulé d'acrylate, ou est le deuxième polymère réticulé d'acrylate, ou est le troisième polymère réticulé d'acrylate, et
dans lequel le premier polymère réticulé d'acrylate contient 70-80 % en poids de segment de polyméthacrylate de méthyle, 2-10 % en poids de segment de polyacrylate d'éthyle, 10-20 % en poids de segment de polyacrylate de butyle et 2-10 % en poids de segment d'acide polyacrylique, le deuxième polymère réticulé d'acrylate contient 30-40 % en poids de segment de polyméthacrylate de méthyle, 2-10 % en poids de segment de polyacrylate d'éthyle, 50-60 % en poids de segment de polyacrylate de butyle et 2-10 % en poids de segment d'acide polyacrylique, et le troisième polymère réticulé d'acrylate contient 50-80 % en poids de segment de polyméthacrylate de méthyle, 2-10 % en poids de segment de polyacrylate d'éthyle, 15-40 % en poids de segment de polyacrylate de butyle et 2-10 % en poids de segment d'acide polyacrylique.

2. Séparateur de batterie selon la revendication 1, dans lequel la température de transition vitreuse du polymère réticulé d'acrylate est de -20 °C à 60 °C, la température de transition vitreuse du copolymère réticulé de styrène-acrylate est de -30 °C à 50 °C, et la température de transition vitreuse du copolymère de fluorure de vinylidène-hexafluoropropylène est de -65 °C à -40 °C.

3. Séparateur de batterie selon la revendication 1, dans lequel
ou
la température de transition vitreuse du premier polymère réticulé d'acrylate est de 50 °C à 60 °C, la température de transition vitreuse du deuxième polymère réticulé d'acrylate est de -20 °C à -5 °C et la température de transition vitreuse du troisième polymère réticulé d'acrylate est de 30 °C à 50 °C, ou
le copolymère réticulé de styrène-acrylate contient 40-50 % en poids de segment de polystyrène, 5-15 % en poids de segment de polyméthacrylate de méthyle, 2-10 % en poids de segment de polyacrylate d'éthyle, 30-40 % en poids de segment de polyacrylate de butyle et 2-10% en poids de segment d'acide polyacrylique ; et la température de transition vitreuse du copolymère réticulé de styrène-acrylate est de 15 °C à 30 °C, ou
le copolymère de fluorure de vinylidène-hexafluoropropylène contient 80-98 % en poids de segment de polyfluorure de vinylidène et 2-20% en poids de segment de polyhexafluoropropylène ; et la température de transition vitreuse du copolymère de fluorure de vinylidène-hexafluoropropylène est de -60 °C à -40 °C.

4. Séparateur de batterie selon la revendication 3, dans lequel
la couche de liaison contient le premier polymère réticulé d'acrylate, le deuxième polymère réticulé d'acrylate et le copolymère réticulé de styrène-acrylate mais ne contient pas le copolymère de fluorure de vinylidène-hexafluoropropylène, et le rapport en poids du premier polymère réticulé d'acrylate sur le deuxième polymère réticulé d'acrylate sur le copolymère réticulé de styrène-acrylate est de (5 à 10):1:(10 à 13) ; ou
la couche de liaison contient le premier polymère réticulé d'acrylate, le deuxième polymère réticulé d'acrylate et le copolymère de fluorure de vinylidène-hexafluoropropylène mais ne contient pas le copolymère réticulé de styrène-acrylate, et le rapport en poids du premier polymère réticulé d'acrylate sur le deuxième polymère réticulé d'acrylate sur le copolymère de fluorure de vinylidène-hexafluoropropylène est de (5 à 15):1:(5 à 12) ; ou
la couche de liaison contient le deuxième polymère réticulé d'acrylate et le copolymère de fluorure de vinylidène-hexafluoropropylène mais ne contient pas le copolymère réticulé de styrène-acrylate, et le rapport en poids du deuxième polymère réticulé d'acrylate sur le copolymère de fluorure de vinylidène-hexafluoropropylène est de 1:5 à 1:20 ; ou
la couche de liaison contient le deuxième polymère réticulé d'acrylate, le copolymère réticule de styrène-acrylate et le copolymère de fluorure de vinylidène-hexafluoropropylène, et le rapport en poids du deuxième polymère réticulé d'acrylate sur le copolymère réticulé de styrène-acrylate sur le copolymère de fluorure de vinylidène-hexafluoropropylène est de 1:(0,5 à 2) : (1 à 5) ; ou
la couche de liaison contient le troisième polymère réticulé d'acrylate, le copolymère réticulé de styrène-acrylate et le copolymère de fluorure de vinylidène-hexafluoropropylène, et le rapport en poids du troisième polymère réticulé d'acrylate sur le copolymère réticulé de styrène-acrylate sur le copolymère de fluorure de vinylidène-hexafluoropropylène est de 1:(0,5 à 2) : (1 à 5) ; ou
la couche de liaison contient le premier polymère réticulé d'acrylate, le deuxième polymère réticulé d'acrylate, le copolymère réticulé de styrène-acrylate et le copolymère de fluorure de vinylidène-hexafluoropropylène, et le rapport en poids du premier polymère réticulé d'acrylate sur le deuxième polymère réticulé d'acrylate sur le copolymère réticulé de styrène-acrylate sur le copolymère de fluorure de vinylidène-hexafluoropropylène est de (10 à 15):1:(0,5 à 2):(5 à 10) ;
le copolymère réticulé de styrène-acrylate contient 40-50 % en poids de segment de polystyrène, 5-15 % en poids de segment de polyméthacrylate de méthyle, 2-10 % en poids de segment de polyacrylate d'éthyle, 30-40 % de segment de polyacrylate de butyle et 2-10 % en poids de segment d'acide polyacrylique, et le copolymère de fluorure de vinylidène-hexafluoropropylène contient 80-98 % en poids de segment de polyfluorure de vinylidène et 2-20 % de segment de polyhexafluoropropylène ; et la température de transition vitreuse du premier polymère réticulé d'acrylate est de 50 °C à 60 °C, la température de transition vitreuse du deuxième polymère réticulé d'acrylate est de -20 °C à -5 °C, la température de transition vitreuse du troisième polymère réticulé d'acrylate est de 30 °C à 50 °C, la température de transition vitreuse du copolymère réticulé de styrène-acrylate est de 15°C à 30 °C et la température de transition vitreuse du copolymère de fluorure de vinylidène-hexafluoropropylène est de -60 °C à -40 °C.

5. Séparateur de batterie selon l'une quelconque des revendications 1 à 3, dans lequel
   la couche de liaison contient en outre au moins un d'un copolymère d'acrylonitrile-acrylate, d'un copolymère de chloroprène-acrylonitrile et d'un copolymère de styrène-butadiène ; ou
   éventuellement, lorsque la couche de liaison contient en outre le copolymère d'acrylonitrile-acrylate, le rapport en poids du copolymère d'acrylonitrile-acrylate sur le polymère réticulé d'acrylate est de 0,05:1 à 2:1 ; ou
   éventuellement, lorsque la couche de liaison contient en outre le copolymère de chloroprène-acrylonitrile, le rapport en poids du copolymère de chloroprène-acrylonitrile sur le polymère réticulé d'acrylate est de 0,15:1 à 7:1 ; ou
   éventuellement, lorsque la couche de liaison contient en outre le copolymère de styrène-butadiène, le rapport en poids du copolymère de styrène-butadiène sur le polymère réticulé d'acrylate est de 0,05:1 à 2:1, ou
   la densité surfacique sur un seul côté de la couche de liaison est de 0,05-0,9 mg/cm$^2$ ; et l'épaisseur sur un seul côté de la couche de liaison est de 0,1-1 $\mu$m, ou
   la membrane de base poreuse est une membrane de base polymère ou une membrane de base céramique, et la membrane de base céramique comprend une membrane de base polymère et une couche de céramique située sur au moins une surface latérale de la membrane de base polymère, et l'épaisseur totale de la membrane de base poreuse est de 9-22 $\mu$m.

6. Procédé de préparation d'un séparateur de batterie selon la revendication 1, le procédé comprenant : la fixation d'une suspension contenant une émulsion acrylique pure auto-réticulée et une émulsion de styrène-acrylique auto-réticulée et/ou une émulsion de copolymère de fluorure de vinylidène-hexafluoropropylène sur au moins une surface latérale d'une membrane de base poreuse, et puis un séchage pour former une couche de liaison présentant une porosité de 40-65 % sur au moins une surface latérale de la membrane de base poreuse.

7. Procédé selon la revendication 6, dans lequel la température de transition vitreuse du polymère réticulé d'acrylate dans l'émulsion acrylique pure auto-réticulée est de -20 °C à 60 °C, la température de transition vitreuse du copolymère réticulé de styrène-acrylate dans l'émulsion de styrène-acrylique auto-réticulée est de -30 °C à 50 °C, et la température de transition vitreuse du copolymère de fluorure de vinylidène-hexafluoropropylène dans l'émulsion de copolymère de fluorure de vinylidène-hexafluoropropylène est de -65 °C à -40 °C.

8. Procédé selon la revendication 6 ou 7, dans lequel une ou plusieurs des caractéristiques suivantes sont satisfaites :

   la suspension contient l'émulsion acrylique pure auto-réticulée et l'émulsion de styrène-acrylique auto-réticulée, mais ne contient pas l'émulsion de copolymère de fluorure de vinylidène-hexafluoropropylène, et le rapport en poids de teneur en solides de l'émulsion acrylique pure auto-réticulée sur l'émulsion de styrène-acrylique auto-réticulée est de 1:0,05 à 1:2 ; ou
   la suspension contient l'émulsion acrylique pure auto-réticulée et l'émulsion de copolymère de fluorure de vinylidène-hexafluoropropylène mais ne contient pas l'émulsion de styrène-acrylique auto-réticulée, et le rapport en poids de teneur en solides de l'émulsion acrylique pure auto-réticulée sur l'émulsion de copolymère de fluorure de vinylidène-hexafluoropropylène est de 1:0,3 à 1:25 ; ou
   la suspension contient l'émulsion acrylique pure auto-réticulée, l'émulsion de styrène-acrylique auto-réticulée et l'émulsion de copolymère de fluorure de vinylidène-hexafluoropropylène, et le rapport en poids de teneur en solides de l'émulsion acrylique pure auto-réticulée sur l'émulsion de styrène-acrylique auto-réticulée sur l'émulsion de copolymère de fluorure de vinylidène-hexafluoropropylène est de 1:(0,01 à 2):(0,3 à 5), ou
   l'émulsion acrylique pure auto-réticulée est un mélange d'une première émulsion acrylique pure auto-réticulée et d'une deuxième émulsion acrylique pure auto-réticulée et/ou d'une troisième émulsion acrylique pure auto-réticulée, ou la deuxième émulsion acrylique pure auto-réticulée, ou la troisième émulsion acrylique pure auto-réticulée ;
   le polymère réticulé d'acrylate dans la première émulsion acrylique pure auto-réticulée contient 70-80 % en poids de segment de polyméthacrylate de méthyle, 2-10 % en poids de segment de polyacrylate d'éthyle, 10-20% en poids de segment de polyacrylate de butyle et 2-10 % en poids de segment d'acide polyacrylique, le polymère réticulé d'acrylate dans la deuxième émulsion acrylique pure auto-réticulée contient 30-40 % en poids de segment de polyméthacrylate de méthyle, 2-10 % en poids de segment de polyacrylate d'éthyle, 50-60 % en poids de segment de polyacrylate de butyle et 2-10 % en poids de segment d'acide polyacrylique, et le polymère réticulé d'acrylate dans la troisième émulsion acrylique pure auto-réticulée contient 50-80 % en poids de segment de polyméthacrylate de méthyle, 2-10 % en poids de segment de polyacrylate d'éthyle, 15-40 % en poids de segment de polyacrylate de butyle et 2-10 % en poids de segment d'acide polyacrylique ; et

la température de transition vitreuse du polymère réticulé d'acrylate dans la première émulsion acrylique pure auto-réticulée est de 50 °C à 60 °C, la température de transition vitreuse du polymère réticulé d'acrylate dans la deuxième émulsion acrylique pure auto-réticulée est de -20 °C à -5 °C, et la température de transition vitreuse du polymère réticulé d'acrylate dans la troisième émulsion acrylique pure auto-réticulée est de 30 °C à 50 °C, ou

le copolymère réticulé de styrène-acrylate dans l'émulsion de styrène-acrylique auto-réticulée contient 40-50 % en poids de segment de polystyrène, 5-15 % en poids de segment de polyméthacrylate de méthyle, 2-10 % en poids de segment de polyacrylate d'éthyle, 30-40 % en poids de segment de polyacrylate de butyle et 2-10 % en poids de segment d'acide polyacrylique ; et la température de transition vitreuse du copolymère réticulé de styrène-acrylate est de 15 °C à 30 °C, ou

le copolymère de fluorure de vinylidène-hexafluoropropylène dans l'émulsion de copolymère de fluorure de vinylidène-hexafluoropropylène contient 80-98 % en poids de segment de polyfluorure de vinylidène et 2-20 % en poids de segment de polyhexafluoropropylène ; et la température de transition vitreuse du copolymère de fluorure de vinylidène-hexafluoropropylène est de -60 °C à -40 °C.

9. Procédé selon l'une quelconque des revendications 6 à 8, dans lequel

la suspension contient la première émulsion acrylique pure auto-réticulée, la deuxième émulsion acrylique pure auto-réticulée et l'émulsion de styrène-acrylique auto-réticulée mais ne contient pas l'émulsion de copolymère de fluorure de vinylidène-hexafluoropropylène, et le rapport en poids de teneur en solides de la première émulsion acrylique pure auto-réticulée sur la deuxième émulsion acrylique pure auto-réticulée sur l'émulsion de styrène-acrylique auto-réticulée est de (5 à 10):1:(10 à 13) ; ou

la suspension contient la première émulsion acrylique pure auto-réticulée, la deuxième émulsion acrylique pure auto-réticulée et l'émulsion de copolymère de fluorure de vinylidène-hexafluoropropylène mais ne contient pas l'émulsion de styrène-acrylique auto-réticulée, et le rapport en poids de teneur en solides de la première émulsion acrylique pure auto-réticulée sur la deuxième émulsion acrylique pure auto-réticulée sur l'émulsion de copolymère de fluorure de vinylidène-hexafluoropropylène est de (5 à 15):1:(5 à 12) ; ou

la suspension contient la deuxième émulsion acrylique pure auto-réticulée et l'émulsion de copolymère de fluorure de vinylidène-hexafluoropropylène mais ne contient pas l'émulsion de styrène-acrylique auto-réticulée, et le rapport en poids de teneur en solides de la deuxième émulsion acrylique pure auto-réticulée sur l'émulsion de copolymère de fluorure de vinylidène-hexafluoropropylène est de 1:5 à 1:20 ; ou

la suspension contient la deuxième émulsion acrylique pure auto-réticulée, l'émulsion de styrène-acrylique auto-réticulée et l'émulsion de copolymère de fluorure de vinylidène-hexafluoropropylène, et le rapport en poids de teneur en solides de la deuxième émulsion acrylique pure auto-réticulée sur l'émulsion de styrène-acrylique auto-réticulée sur l'émulsion de copolymère de fluorure de vinylidène-hexafluoropropylène est de 1:(0,5 à 2) : (1 à 5) ; ou

la suspension contient la troisième émulsion acrylique pure auto-réticulée, l'émulsion de styrène-acrylique auto-réticulée et l'émulsion de copolymère de fluorure de vinylidène-hexafluoropropylène, et le rapport en poids de teneur en solides de la troisième émulsion acrylique pure auto-réticulée sur l'émulsion de styrène-acrylique auto-réticulée sur l'émulsion de copolymère de fluorure de vinylidène-hexafluoropropylène est de 1:(0,5 à 2) : (1 à 5) ; ou

la suspension contient la première émulsion acrylique pure auto-réticulée, la deuxième émulsion acrylique pure auto-réticulée, l'émulsion de styrène-acrylique auto-réticulée et l'émulsion de copolymère de fluorure de vinylidène-hexafluoropropylène, et le rapport en poids de teneur en solides de la première émulsion acrylique pure auto-réticulée sur la deuxième émulsion acrylique pure auto-réticulée sur l'émulsion de styrène-acrylique auto-réticulée sur l'émulsion de copolymère de fluorure de vinylidène-hexafluoropropylène est de (10 à 15):1:(0,5 à 2):(5 à 10) ;

le polymère réticulé d'acrylate dans la première émulsion acrylique pure auto-réticulée contient 70-80 % en poids de segment de polyméthacrylate de méthyle, 2-10 % en poids de segment de polyacrylate d'éthyle, 10-20% en poids de segment de polyacrylate de butyle et 2-10 % en poids de segment d'acide polyacrylique, le polymère réticulé d'acrylate dans la deuxième émulsion acrylique pure auto-réticulée contient 30-40 % en poids de segment de polyméthacrylate de méthyle, 2-10 % en poids de segment de polyacrylate d'éthyle, 50-60 % en poids de segment de polyacrylate de butyle et 2-10 % en poids de segment d'acide polyacrylique, le polymère réticulé d'acrylate dans la troisième émulsion acrylique pure auto-réticulée contient 50-80 % en poids de segment de polyméthacrylate de méthyle, 2-10 % en poids de segment de polyacrylate d'éthyle, 15-40 % en poids de segment de polyacrylate de butyle et 2-10 % en poids de segment d'acide polyacrylique, le copolymère réticulé de styrène-acrylate dans l'émulsion de styrène-acrylique auto-réticulée contient 40-50 % en poids de segment de polystyrène, 5-15 % en poids de segment de polyméthacrylate de méthyle, 2-10 % en poids de segment de polyacrylate d'éthyle, 30-40 % en poids de segment de polyacrylate de butyle et 2-10 % en poids de segment d'acide polyacrylique, et le copolymère de fluorure de vinylidène-hexafluoropropylène dans l'émulsion de copolymère de fluorure de vinylidène-hexafluoropropylène contient 80-98 % en poids de segment de polyfluorure de vinylidène et 2-20% en poids de segment de polyhexafluoropropylène ; et la température de transition vitreuse du polymère réticulé d'acrylate dans la première émulsion acrylique pure auto-réticulée est de 50 °C à 60 °C, la température de transition vitreuse du polymère réticulé d'acrylate dans la deuxième émulsion acrylique pure auto-réticulée est de -20 °C à -5 °C, la température de transition vitreuse du polymère réticulé d'acrylate dans la troisième émulsion acrylique pure auto-réticulée est de 30 °C à 50 °C, la température de transition vitreuse du copolymère réticulé de styrène-acrylate est de 15 °C à 30 °C, et la température de transition vitreuse du copolymère de fluorure de vinylidène-hexafluoropropylène est de -60 °C à -40 °C.

10. Procédé selon l'une quelconque des revendications 6 à 9, dans lequel la suspension contient en outre au moins une d'une émulsion de copolymère d'acrylonitrile-acrylate, d'une émulsion de chloroprène-acrylonitrile et d'un latex de styrène-butadiène ;
éventuellement, lorsque la suspension contient en outre l'émulsion de copolymère d'acrylonitrile-acrylate, le rapport en poids de teneur en solides de l'émulsion de copolymère d'acrylonitrile-acrylate sur l'émulsion acrylique pure auto-réticulée est de 0,05:1 à 2:1 ;
éventuellement, lorsque la suspension contient en outre l'émulsion de chloroprène-acrylonitrile, le rapport en poids de teneur en solides de l'émulsion de chloroprène-acrylonitrile sur l'émulsion acrylique pure auto-réticulée est de 0,15:1 à 7:1 ; et
éventuellement, lorsque la suspension contient en outre le latex de styrène-butadiène, le rapport en poids de teneur en solides du latex de styrène-butadiène sur l'émulsion acrylique pure auto-réticulée est de 0,05:1 à 2:1.

11. Procédé selon l'une quelconque des revendications 6 à 10, dans lequel un procédé de fixation est un procédé de pulvérisation et/ou un procédé de sérigraphie ; les températures opérationnelles du procédé de pulvérisation et du procédé de sérigraphie sont chacune indépendamment de 30 °C à 80 °C ; et la température de séchage est de 30 °C à 80 °C.

12. Batterie au lithium-ion, comprenant une plaque d'électrode positive, une plaque d'électrode négative, un électrolyte et un séparateur de batterie, dans laquelle le séparateur de batterie est le séparateur de batterie selon l'une quelconque des revendications 1 à 5.

13. Procédé de préparation d'une batterie au lithium-ion, comprenant : la stratification ou l'enroulement en séquence d'une plaque d'électrode positive, d'un séparateur de batterie et d'une plaque d'électrode négative en un noyau polaire, puis l'injection d'un électrolyte dans le noyau polaire et un scellage, dans lequel le séparateur de batterie est le séparateur de batterie selon l'une quelconque des revendications 1 à 5.

FIG. 1

FIG. 2

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103633367 A
- CN 101062987 A
- US 20150303003 A
- US 20140248525 A